(19) Europäisches Patentamt
European Patent Office
Office européen des brevets

(11) **EP 3 394 645 B1**

(12) **EUROPEAN PATENT SPECIFICATION**

(45) Date of publication and mention
of the grant of the patent:
**13.10.2021 Bulletin 2021/41**

(21) Application number: **16879878.3**

(22) Date of filing: **11.12.2016**

(51) Int Cl.:
*G01V 1/38* *(2006.01)*        *G01V 1/20* *(2006.01)*

(86) International application number:
**PCT/US2016/066049**

(87) International publication number:
**WO 2017/112436 (29.06.2017 Gazette 2017/26)**

(54) **SEISMIC STREAMER WITH GEL-FILLED FOAM**

SEISMISCHES SENSORKABEL MIT GEL-GEFÜLLTEM SCHAUM

FLÛTE SISMIQUE EN MOUSSE REMPLIE DE GEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2015 US 201562270422 P**

(43) Date of publication of application:
**31.10.2018 Bulletin 2018/44**

(73) Proprietor: **Reflection Marine Norge AS
5160 Laksevåg (NO)**

(72) Inventor: **GUIZELIN, Fabien
N-1383 Asker (NO)**

(74) Representative: **Acapo AS
P.O. Box 1880 Nordnes
5817 Bergen (NO)**

(56) References cited:
**WO-A2-2010/021880        US-A- 5 521 885
US-A- 5 949 018            US-A1- 2010 165 792
US-A1- 2011 273 957        US-A1- 2011 273 957
US-A1- 2012 069 706        US-A1- 2013 051 176
US-A1- 2015 004 457**

## Description

### BACKGROUND

Reflection seismology finds use in geophysics to estimate properties of subsurface formations. Reflection seismology may provide seismic data representing waves of elastic energy, as transmitted by P-waves and S-waves, in a frequency range of approximately 1 Hz to approximately 100 Hz. Seismic data may be processed and interpreted to understand better one or more of composition, fluid content, extent and geometry of subsurface rocks.

### RELEVANT PRIOR ART

Both documents US 5 521 885 A and US 2011/273957 A1 disclose streamers including a foam with gel. The gel is however not indicated as being swellable.

Both documents US 2015/004457 A1 and US 5 949 018 A disclose the use of water swellable gel for the use in underwater batteries or in cables. In these last two documents, the gel however does not fill a foam inside a cable or a streamer.

### SUMMARY

A seismic streamer according to claim 1 includes an outer tube that defines an interior space having a longitudinal axis; sensor packages disposed in the interior space at respective positions along the longitudinal axis; a rope disposed in the interior space and offset from the longitudinal axis; and gel filled foam disposed in the interior space at least in part between the sensor packages and at least in part about portions of the rope where the gel filled foam includes a water swellable material that, responsive to a breach in the outer tube and contact with water, transitions the gel filled foam from an unswollen state to a swollen state that hinders gel leakage from the breach in the outer tube. A method according to claim 13 includes assembling a seismic streamer that includes an outer tube that defines an interior space having a longitudinal axis, sensor packages disposed in the interior space at respective positions along the longitudinal axis, a rope disposed in the interior space and offset from the longitudinal axis, and a water swellable foam disposed in the interior space at least in part between the sensor packages and at least in part about portions of the rope; filling the water swellable foam with gel to form a gel filled water swellable foam that, responsive to a breach in the outer tube and contact with water, transitions the gel filled water swellable foam from an unswollen state to a swollen state that hinders gel leakage from the breach in the outer tube; and sealing the seismic streamer. A method includes receiving signals from sensors of a seismic streamer according to claim 1 or obtained according to claim 13 deployed in water; responsive to a puncture at a location in the outer tube of the seismic streamer and contact between a portion of the water and a portion of the material that swells upon contact with water, swelling the portion of the material that swells upon contact with water; and, responsive to the swelling, hindering gel leakage from the seismic streamer via the puncture.

This summary is provided to introduce a selection of concepts that are further described below in the detailed description.

### BRIEF DESCRIPTION OF THE DRAWINGS

Features and advantages of the described implementations can be more readily understood by reference to the following description taken in conjunction with the accompanying drawings.

Fig. 1 illustrates a geologic environment and a technique;
Fig. 2 illustrates multiple reflections and techniques;
Fig. 3 illustrates a survey technique;
Fig. 4 illustrates a portion of a streamer;
Fig. 5 illustrates a method;
Fig. 6 illustrates a portion of a streamer, an accelerometer and a hydrophone;
Fig. 7 illustrates a portion of a streamer; and
Fig. 8 illustrates a method.

### DETAILED DESCRIPTION

The following description includes the best mode presently contemplated for practicing the described implementations. This description is not to be taken in a limiting sense, but rather is made merely for the purpose of describing the general principles of the implementations. The scope of the described implementations should be ascertained with reference to the issued claims.

As mentioned, reflection seismology finds use in geophysics to estimate properties of subsurface formations. Reflection seismology may provide seismic data representing waves of elastic energy, as transmitted by P-waves and S-waves, in a frequency range of approximately 1 Hz to approximately 100 Hz or optionally less than 1 Hz and/or optionally more than 100 Hz. Seismic data may be processed and interpreted to understand better one or more of composition, fluid content, extent and geometry of subsurface rocks.

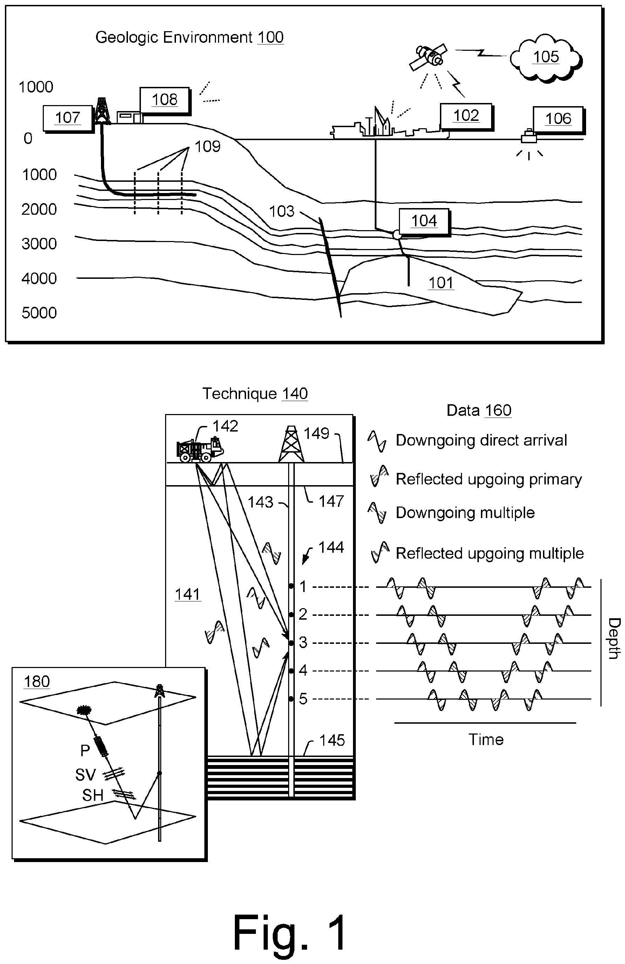

Fig. 1 shows a geologic environment 100 (an environment that includes a sedimentary basin, a reservoir 101, a fault 103, one or more fractures 109, etc.) and an acquisition technique 140 to acquire seismic data (see data 160). A system may process data acquired by the technique 140 to allow for direct or indirect management of sensing, drilling, injecting, extracting, etc., with respect to the geologic environment 100. In turn, further information about the geologic environment 100 may become available as feedback (optionally as input to the system).

An operation may pertain to a reservoir that exists in the geologic environment 100 such as the reservoir 101. A technique may provide information (as an output) that may specifies one or more location coordinate of a feature in a geologic environment, one or more characteristics of a feature in a geologic environment, etc.

The geologic environment 100 may be referred to as or include one or more formations. A formation may be a unit of lithostratigraphy such as a body of rock that is sufficiently distinctive and continuous that it can be mapped. In stratigraphy, a formation may be a body of strata of predominantly one type or combination of types where multiple formations form groups, and subdivisions of formations are members.

A sedimentary basin may be a depression in the crust of the Earth formed by plate tectonic activity in which sediments accumulate. Over a period of geologic time, continued deposition may cause further depression or subsidence. With respect to a petroleum systems analysis, if rich hydrocarbon source rocks occur in combination with appropriate depth and duration of burial, hydrocarbon generation may possibly occur within a basin. Exploration plays and prospects may be developed in basins or regions in which a complete petroleum system has some likelihood of existing. The geologic environment 100 of Fig. 1 may include one or more plays, prospects, etc.

A system may be implemented to process seismic data, optionally in combination with other data. Processing of data may include generating one or more seismic attributes, rendering information to a display or displays, etc. A process or workflow may include interpretation, which may be performed by an operator that examines renderings of information and that identifies structure or other features within such renderings. Interpretation may be or include analyses of data with a goal to generate one or more models and/or predictions (about properties and/or structures of a subsurface region).

A system may include features of a commercially available framework such as the PETREL® seismic to simulation software framework (Schlumberger Limited, Houston, Texas). The PETREL® framework provides components that allow for optimization of exploration and development operations. The PETREL® framework includes seismic to simulation software components that can output information for use in increasing reservoir performance.

A system may include add-ons or plug-ins that operate according to specifications of a framework environment. A commercially available framework environment marketed as the OCEAN® framework environment (Schlumberger Limited, Houston, Texas) allows for integration of add-ons (or plug-ins) into a PETREL® framework workflow. The OCEAN® framework environment leverages .NET® tools (Microsoft Corporation, Redmond, Washington) and offers stable, user-friendly interfaces for efficient development. Seismic data may be processed using a framework such as the OMEGA® framework (Schlumberger Limited, Houston, TX). The OMEGA® framework provides features that can be implemented for processing of seismic data. A framework may be scalable such that it enables processing and imaging on a single workstation, on a massive compute cluster, etc.

A framework for processing data may include features for 2D line and 3D seismic surveys. Modules for processing seismic data may include features for prestack seismic interpretation (PSI), optionally pluggable into a framework such as the OCEAN® framework. A workflow may be specified to include processing via one or more frameworks, plug-ins, add-ons, etc. A workflow may include quantitative interpretation, which may include performing pre- and poststack seismic data conditioning, inversion (seismic to properties and properties to synthetic seismic), wedge modeling for thin-bed analysis, amplitude versus offset (AVO) and amplitude versus angle (AVA) analysis, reconnaissance, etc. A workflow may aim to output rock properties based at least in part on processing of seismic data. Various types of data may be processed to provide one or more models (earth models); consider processing of one or more of seismic data, well data, electromagnetic and magnetic telluric data, reservoir data, etc.

In Fig. 1, the geologic environment 100 includes an offshore portion and an onshore portion. A geologic environment may be or include one or more of an offshore geologic environment, a seabed geologic environment, an ocean bed geologic environment, etc.

The geologic environment 100 may be outfitted with any of a variety of sensors, detectors, actuators, etc. Equipment 102 may include communication circuitry to receive and to transmit information with respect to one or more networks 105. Such information may include information associated with downhole equipment 104, which may be equipment to acquire information, to assist with resource recovery, etc. Other equipment 106 may be located remote from a well site and include sensing, detecting, emitting or other circuitry. Such equipment may include storage and communication circuitry to store and to communicate data, instructions, etc. One or more satellites may be provided for purposes of communications, data acquisition, etc.; noting that a satellite may additionally or alternatively include circuitry for imagery (spatial, spectral, temporal, radiometric, etc.).

Fig. 1 also shows the geologic environment 100 as optionally including equipment 107 and 108 associated with a well that includes a substantially horizontal portion that may intersect with one or more of the one or more fractures 109; consider a well in a shale formation that may include natural fractures, artificial fractures (hydraulic fractures) or a combination of natural and artificial fractures. A well may be drilled for a reservoir that is laterally extensive. Lateral variations in properties, stresses, etc. may exist where an assessment of such variations may assist with planning, operations, etc. to develop the reservoir (via fracturing, injecting, extracting, etc.). The equipment 107 and/or 108 may include components, a system, systems, etc. for fracturing, seismic sensing, analysis of seismic data, assessment of one or more fractures, etc.

A system may be used to perform one or more workflows. A workflow may be a process that includes a number of worksteps. A workstep may operate on data to create new data, to update existing data, etc. A system may operate on one or more inputs and create one or more results based on one or more algorithms. A system may include a workflow editor for creation, editing, executing, etc. of a workflow. A workflow may include receiving instructions to interact with rendered information to process information and optionally render processed information. A workflow may include transmitting information that may control, adjust, initiate, etc. one or more operations of equipment associated with a geologic environment.

In Fig. 1, the technique 140 may be implemented with respect to a geologic environment 141. As shown, an energy source (a transmitter) 142 may emit energy where the energy travels as waves that interact with the geologic environment 141. The geologic environment 141 may include a bore 143 where one or more sensors (receivers) 144 may be positioned in the bore 143. Energy emitted by the energy source 142 may interact with a layer (a structure, an interface, etc.) 145 in the geologic environment 141 such that a portion of the energy is reflected, which may then be sensed by one or more of the sensors 144. Such energy may be reflected as an upgoing primary wave (or "primary" or "singly" reflected wave). A portion of emitted energy may be reflected by more than one structure in the geologic environment and referred to as a multiple reflected wave (or "multiple"). The geologic environment 141 is shown as including a layer 147 that resides below a surface layer 149. Given such an environment and arrangement of the source 142 and the one or more sensors 144, energy may be sensed as being associated with particular types of waves.

Fig. 1 also shows various types of waves as including P, SV an SH waves. A P-wave can be an elastic body wave or sound wave in which particles oscillate in the direction the wave propagates. P-waves incident on an interface (at other than normal incidence, etc.) may produce reflected and transmitted S-waves ("converted" waves). An S-wave or shear wave can be an elastic body wave in which particles oscillate perpendicular to the direction in which the wave propagates. S-waves may be generated by a seismic energy sources (other than an air gun). S-waves may be converted to P-waves. S-waves tend to travel more slowly than P-waves and do not travel through fluids that do not support shear. In general, recording of S-waves involves use of one or more receivers operatively coupled to earth (capable of receiving shear forces with respect to time). Interpretation of S-waves may allow for determination of rock properties such as fracture density and orientation, Poisson's ratio and rock type by crossplotting P-wave and S-wave velocities, and/or by other techniques. Parameters that may characterize anisotropy of media (seismic anisotropy) can include one or more of the Thomsen parameters $\varepsilon$, $\delta$ and $\gamma$.

Seismic data may be acquired for a region in the form of traces. In Fig. 1, the technique 140 may include the source 142 for emitting energy where portions of such energy (directly and/or reflected) may be received via the one or more sensors 144. Energy received may be discretized by an analog-to-digital converter that operates at a sampling rate. Acquisition equipment may convert energy signals sensed by a sensor to digital samples at a rate of one sample per approximately 4 ms. Given a speed of sound in a medium or media, a sample rate may be converted to an approximate distance. The speed of sound in rock may be of the order of around 5 km per second. Thus, a sample time spacing of approximately 4 ms would correspond to a sample "depth" spacing of about 10 meters (assuming a path length from source to boundary and boundary to sensor). A trace may be about 4 seconds in duration; thus, for a sampling rate of one sample at about 4 ms intervals, such a trace would include about 1000 samples where latter acquired samples correspond to deeper reflection boundaries. If the 4 second trace duration of the foregoing scenario is divided by two (to account for reflection), for a vertically aligned source and sensor, the deepest boundary depth may be estimated to be about 10 km (assuming a speed of sound of about 5 km per second).

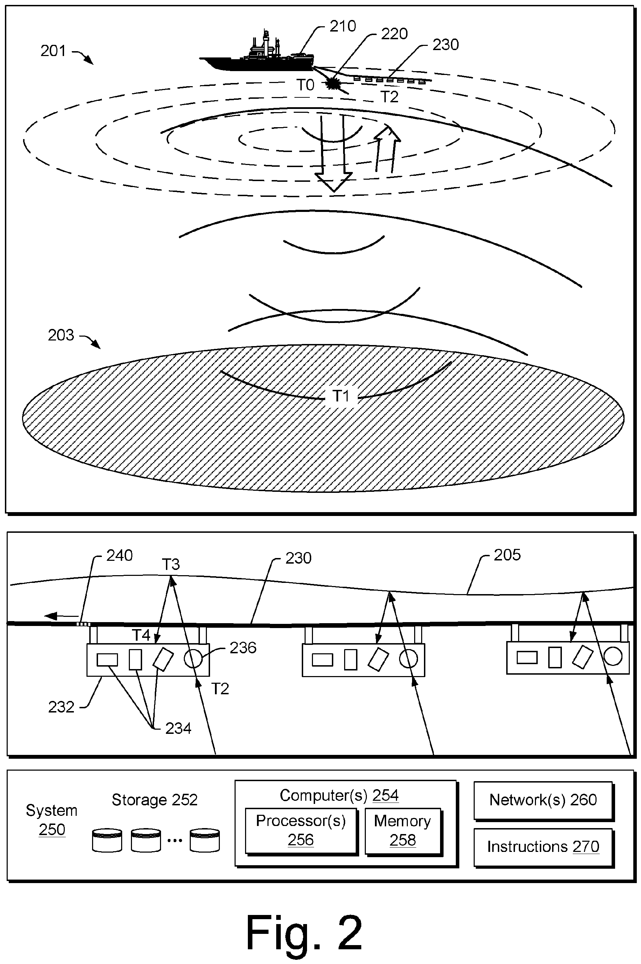

Fig. 2 shows a geologic environment 201 that includes a seabed 203 and a sea surface 205. As shown, equipment 210 such as a ship may tow an energy source 220 and a string of sensors 230 at a depth below the sea surface 205. The energy source 220 may emit energy at a time T0, a portion of that energy may be reflected from the seabed 203 at a time T1 and a portion of that reflected energy may be received at the string of sensors 230 at a time T2.

As mentioned with respect to the technique 140 of Fig. 1, a wave may be a primary or a wave may be a multiple. As shown in an enlarged view of the geologic environment 201, the sea surface 205 may act to reflect waves such that sensors 232 of the string of sensors 230 may sense multiples as well as primaries. In particular, the sensors 232 may sense so-called sea surface multiples, which may be multiples from primaries or multiples of multiples (due to sub-seabed reflections, etc.).

Each of the sensors 232 may sense energy of an upgoing wave at a time T2 where the upgoing wave reflects off the sea surface 205 at a time T3 and where the sensors may sense energy of a downgoing multiple reflected wave at a time T4 (see also the data 160 of Fig. 1 and data 240 of Fig. 2). Sensing of the downgoing multiple reflected wave may be considered noise that interferes with sensing of one or more upgoing waves. An approach that includes summing data acquired by a geophone and data acquired by a hydrophone may help to diminish noise associated with downgoing multiple reflected waves. Such an approach may be employed where sensors may be located proximate to a surface such as the sea surface 205 (arrival times T2 and T4 may be relatively close). The sea surface 205 or a water surface may be an interface between two media; consider an air and water interface. Due to differing media properties, sound waves may travel at about 1,500 m/s in water and at about 340 m/s in air. At an air and water interface, energy may be transmitted and reflected.

Each of the sensors 232 may include at least one geophone 234 and a hydrophone 236. A geophone may be a sensor configured for seismic acquisition, whether onshore and/or offshore, that can detect velocity produced by seismic waves and that can transform motion into electrical impulses. A geophone may be configured to detect motion in a single direction. A geophone may be configured to detect motion in a vertical direction. Three mutually orthogonal geophones may be used in combination to collect so-called 3C seismic data. A hydrophone may be a sensor configured for use in detecting seismic energy in the form of pressure changes under water during marine seismic acquisition. Hydrophones may be positioned along a string or strings to form a streamer or streamers that may be towed by a seismic vessel (or deployed in a bore). Thus, in Fig. 2, the at least one geophone 234 can provide for motion detection and the hydrophone 236 can provide for pressure detection. The data 240 (analog and/or digital) may be transmitted via equipment for processing, etc.

A method may include analysis of hydrophone response and vertical geophone response, which may help to improve a PZ summation by reducing receiver ghost and/or free surface-multiple noise contamination. A ghost may be defined as a reflection of a wavefield as reflected from a water surface (water and air interface) that is located above a receiver, a source, etc. (a receiver ghost, a source ghost, etc.). A receiver may experience a delay between an upgoing wavefield and its downgoing ghost, which may depend on depth of the receiver.

A surface marine cable may be or include a buoyant assembly of electrical wires that connect sensors and that can relay seismic data to the recording seismic vessel. A multi-streamer vessel may tow more than one streamer cable to increase the amount of data acquired in one pass. A marine seismic vessel may be about 75 m long and travel about 5 knots while towing arrays of air guns and streamers containing sensors, which may be located about a few meters below the surface of the water. A so-called tail buoy may assist crew in locating an end of a streamer. An air gun may be activated periodically, such as about each 25 m (about at 10 second intervals) where the resulting sound wave travels into the Earth, which may be reflected back by one or more rock layers to sensors on a streamer, which may then be relayed as signals (data, information, etc.) to equipment on the tow vessel.

In Fig. 2, the equipment 210 may include a system such as the system 250. As shown in Fig. 2, the system 250 includes one or more information storage devices 252, one or more computers 254, one or more network interfaces 260 and one or more modules 270. As to the one or more computers 254, each computer may include one or more processors (or processing cores) 256 and memory 258 for storing instructions executable by at least one of the one or more processors. A computer may include one or more network interfaces (wired or wireless), one or more graphics cards, a display interface (wired or wireless), etc. A system may include one or more display devices (optionally as part of a computing device, etc.).

Pressure data may be represented as "P" and velocity data may be represented as "Z"; noting, however, that the vertical component of a measured particle velocity vector may be denoted "V" and that "Z" may refer to a scaled, measured particle velocity. In various equations presented herein, "V" represents a measured velocity and "Z" represents a scaling thereof.

A hydrophone may sense pressure information (P data) and a geophone may sense velocity information (V and/or Z data). A hydrophone may output signals, optionally as digital data for receipt by a system. A geophone may output signals, optionally as digital data for receipt by a system. The system 250 may receive P and V/Z data via one or more of the one or more network interfaces 260 and process such data via execution of instructions stored in the memory 258 by the processor 256. The system 250 may store raw and/or processed data in one or more of the one or more information storage devices 252.

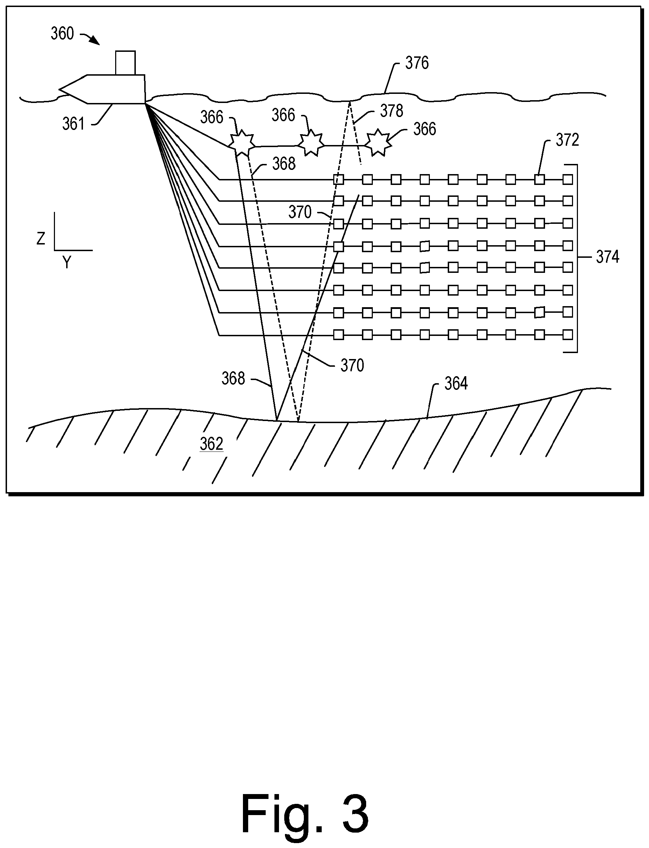

Fig. 3 shows a side view of a marine-based survey 360 of a subterranean subsurface 362. In the survey 360 of Fig. 3, the subsurface 362 includes a seafloor surface 364. Seismic sources 366 may include marine sources such as vibroseis or air guns, which may propagate seismic waves 368 (energy signals) into the Earth over an extended period of time or at a nearly instantaneous energy provided by impulsive sources. The seismic waves may be propagated by marine sources as a frequency sweep signal. Marine sources of the vibroseis type may initially emit a seismic wave at a low frequency (about 5 Hz) and increase the seismic wave to a higher frequency (about 80 Hz to about 90 Hz or more) over time.

The component(s) of the seismic waves 368 may be reflected and converted by the seafloor surface 364 (as a reflector), and seismic wave reflections 370 may be received by a plurality of seismic receivers 372. Seismic waves may penetrate the subsurface 362 below the seafloor surface 364 and be reflected by one or more reflectors therein and received by one or more of the plurality of seismic receivers 372. As shown in Fig. 3, the seismic receivers 372 may be disposed on a plurality of streamers (a streamer array 374). The seismic receivers 372 may generate electrical signals representative of the received seismic wave reflections 370. The electrical signals may be embedded with information regarding the subsurface 362 and captured as a record of seismic data.

In one implementation, each streamer may include streamer steering devices such as a bird, a deflector, a tail buoy and the like. One or more streamer steering devices may be used to control streamer position.

In one implementation, the seismic wave reflections 370 may travel upward and reach the water/air interface at the water surface 376, a portion of reflections 370 may then reflect downward again (sea-surface ghost waves 378) and be received by the plurality of seismic receivers 372. The sea-surface ghost waves 378 may be referred to as surface multiples. The point on the water surface 376 at which the wave is reflected downward may be referred to as a downward reflection point.

Electrical signals generated by one or more of the receivers 372 may be transmitted to a vessel 361 via transmission cables, wireless communication or the like. The vessel 361 may then transmit the electrical signals to a data processing center. Alternatively, the vessel 361 may include an onboard computing system capable of processing the electrical signals (representing seismic data). Surveys may be of formations deep beneath the surface. The formations may include multiple reflectors, some of which may include dipping events, and may generate multiple reflections (including wave conversion) for receipt by the seismic receivers 372. Seismic data may be processed to generate a seismic image of the subsurface.

A marine seismic acquisition system may tow streamers in the streamer array 374 at an approximate even depth (about 5 m to about 10 m). However, the marine based survey 360 may tow each streamer in streamer array 374 at different depths such that seismic data may be acquired and processed in a manner that avoids the effects of destructive interference due to seasurface ghost waves. For instance, the marine-based survey 360 of Fig. 3 illustrates eight streamers towed by the vessel 361 at eight different depths. The depth of each streamer may be controlled and maintained using the birds disposed on each streamer.

A survey may use equipment that can be positioned on a seabed such as seismic sensor nodes. Such nodes may include motion sensors that can measure one or more of displacement, velocity and acceleration. A motion sensor may be a geophone, an accelerometer, etc. As to pressure waves, a node may include pressure wave sensors such as hydrophones. Various nodes may optionally be coupled via a cable or cables. A cable may include one or more sensors. A cable that extends from, to, between, etc., one or more nodes may optionally include one or more sensors that may include one or more geophones, one or more hydrophones, etc.

As mentioned, a vessel or vessels may include one or more sensors that may be towable. A streamer that includes one or more sensors may be towed by a vessel and utilized to acquire information such as seismic information associated with energy emitted by one or more sources.

A streamer can include sensor circuitry for acquiring measurements of a seismic pressure wavefield and its gradient; consider sensor circuitry that can measure a seismic pressure wavefield and its gradient in vertical and crossline directions.

Streamers can be towed at spatial distances in a range of between about 50 meters and about 200 meters. Sampling in a crossline direction may be in a range of about 16 times to about 64 times sparser than an inline direction. In such a survey approach, seismic energy propagating with a substantial crossline element (across a streamer spread) may become aliased and create noise in image volumes (as may be subsequently used for structural and stratigraphic inversion, etc.). Such effects can increases risk in exploration, appraisal, development, and production activities.

A streamer can include point-receiver circuitry. A point-receiver approach can combine hydrophones with tri-axial microelectromechanical system (MEMS) accelerometers. In such a streamer, the MEMS accelerometers can measure a substantial bandwidth of particle acceleration due to up- and down-going seismic wavefields. Measurements of particle acceleration can be directly related to a gradient in a pressure wavefield. A streamer can include the ISOMETRIX™ technology, which includes point-receiver circuitry (Schlumberger Limited, Houston, Texas).

A streamer can include particle motion sensors that are sensitive to acoustical vibrations within a streamer cable. Streamer technology can account for one or more noise modes that may propagate along at least a portion of a streamer. A noise mode can depend on one or more factors. A noise mode can depend on streamer construction and sensor positioning.

A streamer may be implemented to perform dense single-sensor sampling of accelerometers. Such an approach can allow for accurately characterizing and removing one or more noise modes at least in part at low frequencies. One or more technologies and/or methods can provide for suppression of noise. Noise suppression can provide reliable signal from accelerometers below about 10 Hz. Where a system includes a spread of about 12 streamers of about 8 km lengths, such a system can include over about 500,000 active sensors. In such a streamer, an acquisition system can provide for continuously recording of individual shots that are part of a seismic survey. A method can include storing data and/or processing data.

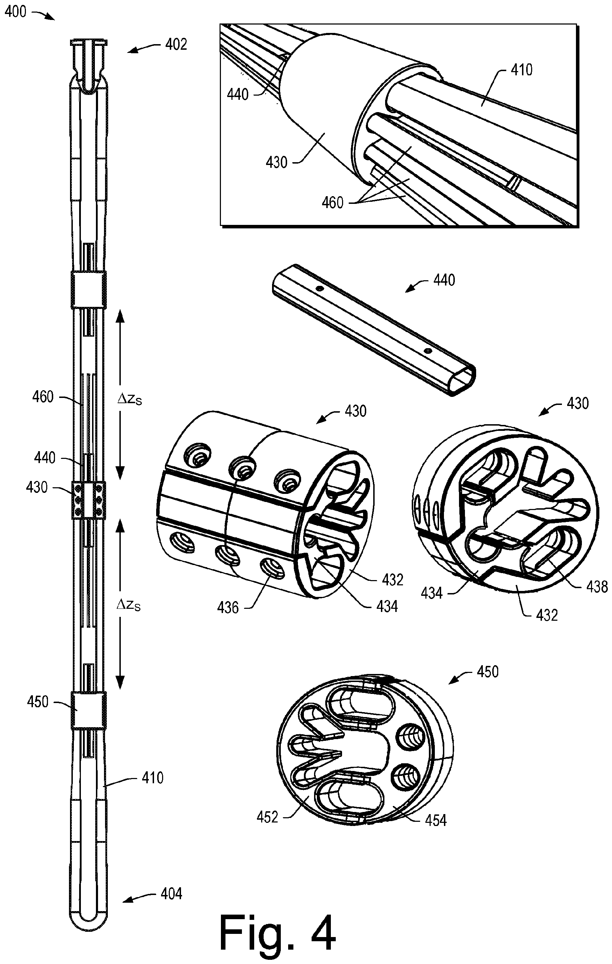

Fig. 4 shows streamer internals 400 that include a proximate end 402 and a distal end 404. The proximate end 402 may be operatively coupled to a towline, etc. The streamer internals 400 may be a portion of a streamer or a segment of a streamer; consider a streamer that includes a plurality of segments where each segment has a length that may be of the order of meters. A streamer can include a plurality of segments to have an overall length of the order of hundreds of meters (a kilometer or more).

The streamer internals 400 can include a strength rope 410 that is formed as a loop that extends from the proximate end 402 to the distal end 404 and from the distal end 404 to the proximate end 402. Such a strength rope 410 may be a continuous rope or may be rope portions coupled to together (using one or more couplings, etc.).

The streamer internals 400 can include components that are coupled to (carried by) the strength rope 410. Components can include one or more types of spacers 430 and 450. A spacer can "space" a housing 440 and/or wires 460 (electrical wires and/or one or more optical fibers) within an internal space defined by an outer tube of a streamer where streamer internals can reside. A spacer can maintain a geometric arrangement of internal components of a streamer within a bore of a tube of a streamer (a lumen of a tube), which may be an outer tube that includes an exterior surface that is exposed to an internal environment.

In Fig. 4, the spacer 430 includes two pieces 432 and 434 such that the pieces 432 and 434 may be in a disassembled state, positioned about various components and then joined to be in an assembled state. A spacer may include a locking mechanism that locks pieces together. The spacer 430 includes bolt or screw bores 436 that can receive bolts or screws to lock the pieces 432 and 434 together. A spacer may be a single piece spacer that includes a slit or slits that can be spread to accommodate a housing, a wire, a fiber, etc. In Fig. 4, the spacer 430 includes keys 438 that may engage the rope 410, which may include a keyway or keyways. A spacer can include one or more keys and/or one or more keyways and a component may include one or more keyways and/or one or more keys such that a space can be coupled to a component and/or vice versa to locate the spacer and component axially with respect to each other and radially and/or azimuthally (to help maintain alignment of components during assembly, use, etc.).

In Fig. 4, the streamer internals 400 can be disposed along a length of a streamer that can be defined by a z-axis. In such an approach, one or more axial spacings between spacers may be defined by a dimension or dimensions $\Delta z_S$. Such a dimension may be of the order of ten centimeters or tens of centimeters. For a streamer segment of about 100 meters in length, the streamer segment may include one hundred or more spacers; consider a streamer segment with about four hundred spacers over about 100 meters (spacing center-to-center of about 25 centimeters). A streamer outer tube may be of a diameter of the order of tens of millimeters (about 20 millimeters to about 80 millimeters). A streamer can include a number of sensors, which may be spaced axially; consider about 64 3-axis accelerometers (3C geophones) and about 32 hydrophones; noting that other arrangements, types of sensors, number of sensors, etc., may be included in a streamer. Such sensors may be within respective housings (see the housing 440) and operatively coupled to one or more wires, fibers, etc. (see the wires 460). Wires and/or fibers may be individually spaced and/or gathered together with a sheath or other binding material about them.

In a streamer, internals may define in part one or more chambers that can be formed over one of the lengths $\Delta z_S$ as shown in Fig. 4 when a tube is provided to contain the internals.

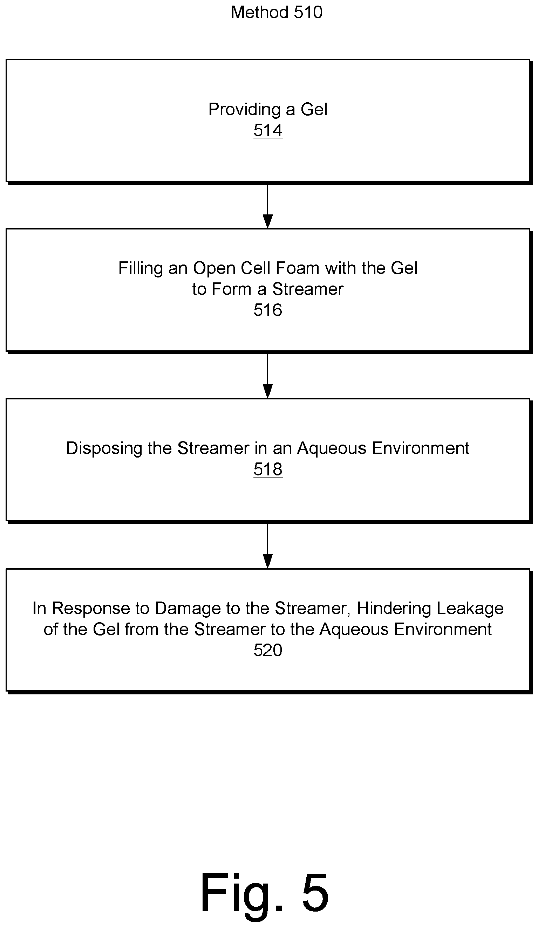

Fig. 5 shows a method 500 that includes a provision block 514 for providing a gel, a fill block 516 for filling an open cell foam with the gel to form a streamer, a disposition block 518 for disposing the streamer in an aqueous environment and a hindrance block 520 for, in response to damage to the streamer, hindering leakage of the gel from the streamer to the aqueous environment. Hindering leakage is part of a state transition process that involves transitioning a gel filed foam from a first state to a second state responsive to contact with water. In such an approach, the streamer can include an outer tube where the foam and the gel are disposed within a space defined at least in part by the outer tube. In such an approach, the open cell foam may be a matrix where the gel can enter into cells of the foam to form a composite foam and gel material. The method 500 can include filling the open cell foam with the gel under conditions that facilitate entry of the gel into cells of the foam (vacuum fill, pressure fill, elevated temperature to reduce viscosity, etc.). Such conditions can differ from those where the streamer is deployed, where flow of the gel from the foam is hindered due to the foam structure and/or properties of the gel (temperature, pressure, state, etc.).

The streamer of the method 500 of Fig. 5 may be utilized for one or more purposes. The streamer of the method 500 of Fig. 5 may be a streamer or streamer cable for use in performing a seismic survey.

Such a streamer includes an outer tube that defines an interior space having a longitudinal axis; sensor packages disposed in the interior space at respective positions along the longitudinal axis; a rope disposed in the interior space and offset from the longitudinal axis; and gel filled foam disposed in the interior space at least in part between the sensor packages and at least in part about portions of the rope. Such a streamer includes gel filled foam that includes a water swellable material that, responsive to a breach in the outer tube and contact with water, transitions the gel filled foam from an unswollen state to a swollen state that hinders gel leakage from the breach in the outer tube.

An unswollen state can correspond to a manufactured state that is substantially water tight with respect to an inner space defined by an outer tube. An unswollen state may be characterized by a density, a composition, etc. An unswollen state may be an oil-based gel filled foam state where a cell volume of an open celled foam is greater than approximately 90 percent filled with an oil-based gel. Such an open celled foam may be predominantly hydrophilic such that contact between the oil-based gel and the open celled foam struts occurs. A swollen state may be a state where water has contacted foam, which may be doped with a water swellable material. In such a swollen state, some amount of water can exist in the cell volume of the open celled foam. Water can be a chemical agent that causes a transition from an unswollen state to a swollen state. In a swollen state, a foam may be reduced in cell volume size as struts may increase in size due to water absorption, water reaction, etc. Such a foam may be less amenable to cell-to-cell flow and hence hinder flow of gel through cells of the foam and through a breach in an outer tube. A swollen state may be characterized by a higher density due to absorption of water by a water swellable foam. A transition from an unswollen state to a swollen state occurs responsive to a breach in an outer tube of a streamer. A breached region may be isolated by transitioning gel filled foam along a length of that region to a swollen state. Isolation can reduce transport of water into and within an interior space defined by an outer tube and can reduce transport of gel within the interior space and from the interior space to an exterior space of the outer tube via a puncture, cut, etc.

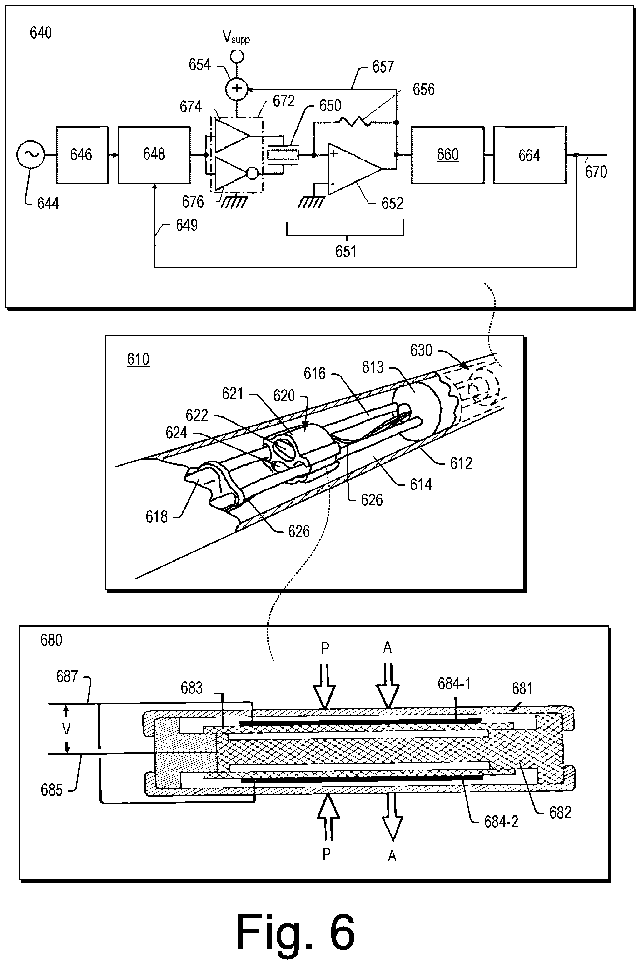

Fig. 6 shows a portion of a streamer cable 610, an accelerometer 640 and a hydrophone 680. As shown in Fig. 6, the streamer cable 610 includes an outer tube 612 with one or more spacers 613 that define a chamber 614, strength ropes 616 (ropes, fibers, etc.), a fixture 618, a pressure sensor package 620 and a velocity sensor package 630. As shown, the pressure sensor package 620 can includes a housing 621 and one or more pressure sensors 621 and 622 that are disposed at least in part in the housing 621. The housing 621 can include clips that can couple the housing 621 to the strength ropes 616, which can help to locate the pressure sensor package 620 within the chamber 614 defined by the outer tube 612. As shown, one or more wires 626 can be operatively coupled to the one or more pressure sensors 621 and 622 and/or to one or more velocity sensors of the velocity sensor package 630. The wires 626 can run though the spacer 613 and the fixture 618, both of which may also accommodate the strength ropes 616. The velocity sensor package 630 can include a housing that is supported within a chamber of the outer tube 612 (optionally a chamber that does not include a pressure sensor package, etc.).

Two of the spacers 613 can define an axial dimension of the chamber 614. The chamber 614 can be at least partially filled with a fluid or fluids and/or one or more other materials (gel, etc.). The streamer cable 610 can include silicone oil in the chamber 614.

One or more of the accelerometers 640 may be included in the velocity sensor package 630. As to the pressure sensor package 620, while labels are illustrated for the two sensors 622 and 624, the pressure sensor package 620 can include a single pressure sensor or more than two pressure sensors. More than one sensor package may be included in a chamber where the sensor packages in the chamber may optionally differ (as to sensor type, etc.). The streamer cable 610 can include a plurality of pressure sensors (hydrophones) and a plurality of particle velocity sensors (geosensors, geophones or accelerometers).

As shown in Fig. 6, the accelerometer 640 can include a system clock generator 644, a jitter filter 646, a pulse generator 648, a return connection 649, a sensor 650, a charge amplifier 651, an adder 654, a resistor 656, an adder connection 657, an amplitude detector 660, a loop controller 664, a digital output 670 and logic 672 with complimentary drivers 674 and 676. The accelerometer 640 can be part of a seismic sensor cable (a streamer, etc.).

In Fig. 6, the accelerometer 640 can include a capacitive MEMS-based sensor. As illustrated in Fig. 6, the sensor 650 can include an armature and a pair of fixed position electrodes attached to the armature. A sensor may include a differential capacitor, in which a mobile electrode moves along a sensitive axis in response to an external acceleration.

The accelerometer 640 may be subjected to inertial forces caused by an external acceleration where a proof mass may be kept in an equilibrium position by electrostatic forces controlled via feedback circuitry. In Fig. 6, the amplitude detector 660 and the loop controller 664 can provide a substantially high gain where residual movement of a mobile mass with respect to its equilibrium position may be kept close to a null point. In such an approach, magnitude and direction of a net restoring force can be a difference between attractive forces working in opposite directions.

Sampling noise can be kT/C noise (thermal noise), which can be introduced by switching and can degrade a dynamic range of a sensor. In Fig. 6, the accelerometer 640 can include the charge amplifier 651 configured with an input terminal that is continuously connected to a mobile electrode (during times in which the sensor 650 receives both actuation and activation voltages). In such an approach, sampling noise can be reduced in comparison to circuitry that does not include such a configuration of components.

In Fig. 6, the accelerometer 640 can include a constant charge drive for the sensor 650. The charge amplifier 651 of the accelerometer 640 can modulate, or adjust, actuation voltage based on a proof mass movement, which may thereby increase available signal-to-noise ratio. As shown in Fig. 6, a feedback network can be associated with the charge amplifier 651. An output terminal of the amplifier 652 can be connected via the adder connection 657 to the adder 654, which can combine an output signal from the amplifier 652 with a supply voltage $V_{supp}$. In such an arrangement, the supply voltage that is applied to the logic 672, from the adder 654, can be modulated according to a sensed signal that as available at the output terminal of the amplifier 652; and as a result, the actuation force can be independent of the proof mass movement.

A sensor package may include a three component (3C) particle motion sensor assembly; consider a 3C accelerometer assembly. Such an assembly may acquire inline (x), crossline (y) and vertical (z) particle acceleration measurements; consider an accelerometer assembly that includes microelectromechanical system (MEMS) sensor units that sense accelerations along respective inline (x), crossline (y) and vertical (z) axes. In a package, orientations of MEMS sensor units may be appropriately varied for purposes of alignment with corresponding axes.

In Fig. 6, as shown in an approximate cross-sectional view, the hydrophone 680 can include a sheath 681, a core 682, an electrode 683 and at least one piezoelectric element 684-1 and 684-2, which may be a ceramic-based piezoelectric element or elements. As shown, a potential (V) may be measured across wires 685 and 687 where the potential (V) varies based at least in part on response of the at least one piezoelectric element 684-1 and 684-2 to external forces such as pressure and/or acceleration. A hydrophone may include charge measurement circuitry where charge varies based at least in part on response of one or more pressure sensitive elements (piezoelectric, etc.).

A piezoelectric material can produce an electrical potential when it is subjected to physical deformation. A piezoelectric material can include a crystalline structure (quartz, tourmaline, a poly-crystalline ceramic, etc.). A lead zirconate titanate (PZT) may be utilized.

A hydrophone may include a plate of piezoelectric ceramic placed on an elastic electrode. In such an approach, the active element can be deformed by pressure variations in surrounding water and produce a voltage collected between the electrode and a terminal bonded to the other face. The electrode can rest on a metallic core that supports its ends and that may also limit its maximum deformation (to avoid damage to the ceramic). A hydrophone can be configured to preserve integrity even where it may be accidentally submitted to high pressures such as when a streamer breaks and drops to the bottom.

As the active element has mass, it can produce a voltage when it is subjected to acceleration. In off-shore operations, with boat movements and waves, a hydrophone can be subjected to accelerations, which can create noise in the absence of application of a compensation technique. To diminish the effect of acceleration, a hydrophone can be assembled with elements that may be paired, as shown in Fig. 6 (see elements 684-1 and 684-2 with respect to the direction of acceleration). In such an approach, voltage produced by acceleration can cancel whereas voltage produced by pressure can add.

As mentioned, the streamer cable is at least partially filled with a material (a fluid, a gel, etc.). An outer tube or jacket may be of the order of a few millimeters thick as to a wall thickness. An outer tube may be constructed of a material or materials that provide integrity while allowing for responsiveness as to sensing. Issues that may arise at sea include shark bites and other physical hazards that may be encountered during towing, storage and deployment.

Streamer cables may be spooled onto drums for storage on a vessel, which subjects the streamer cables to various contact and bending forces, etc. (consider winding and unwinding operations).

A streamer cable may be serviceable in that repairs may be made. Such repairs may be at sea or at a land-based facility. In general, operations aim to avoid or otherwise diminish down time due to expense and costs (vessel, crew, production schedules, etc.). In various geographies, weather may vary and particular conditions, seasons, etc. may cause some amount of uncertainty in scheduling. In some geographies, regular "windows" exist where conditions can be more favorable for performing surveys.

A streamer according to the invention includes one or more materials that can swell; consider a streamer that includes a rubber or another type of material that can swell when exposed to a fluid, a gel, etc. A swellable material may swell when exposed to oil, which may be a silicone oil. A swellable material may swell when exposed to water. A swellable material may swell when exposed to a filler material that is present in a seismic streamer (an oil, a gel, etc.); a swellable spacer may swell and help to form chambers, which may isolate portions of the filler material (between two spacers).

A swellable material is a material that, in response to a puncture of the outer tube, swells upon contact with water from an exterior environment to hinder leakage of gel from an interior space of the outer tube to the exterior environment. A streamer can be a self-healing streamer that acts to hinder leakage of fluid and/or gel from inside the streamer to an aqueous environment outside the streamer via swelling of a material inside the streamer that swells upon contact with water from the aqueous environment. A material that swells upon contact with water according to the present invention is a foam material, which is a foam doped with a water swellable material.

A polyurethane foam can be hydrophobic and/or hydrophilic. A polyurethane foam can be at least in part a hydrophilic aliphatic polyurethane foam that has a volume swelling response upon contact with water to increase foam volume due to water imbibition. A polyurethane foam may be formed to include water swellable portions that may swell via water imbibition. Such a foam is gel-filled where swelling of the foam acts to hinder transport of the gel, particularly where the foam, as a gel-filled foam, are confined at least in part volumetrically by an outer tube of a streamer. Such a foam can be considered to be a healant material of a streamer because a puncture in the outer tube can allow water to contact the gel-filled foam and cause it to swell to hinder transport of the gel from an interior space of the outer tube to an exterior space via the puncture.

In Fig. 6, the streamer 610 can include a contiguous space that extends over a plurality of chambers. In such a streamer, where the outer tube 612 is penetrated, fluid within the contiguous space may flow out of the streamer (due to pressure, displacement, etc.); consider a shark bite that punctures the outer tube 612. In response to a rupture, fluid within a contiguous space can begin to exit via puncture holes and/or tears, etc., which may be 360 degrees about an axis of a streamer. As the fluid exits, individual chambers may become at least in part gas filled and/or filled with water. In such an approach, the environment of a sensor package is altered, which can, in turn, alter response of one or more sensors of the sensor package.

A streamer can include gel that can support one or more sensor packages. In such a streamer, the gel chemistry can be tailored to provide adequate noise dampening and physical support.

As mentioned, streamers can be damaged during deployment, retrieval, storage, operation, etc. (via fishing gear, animal bites, etc.). Upon puncture, tear, etc. of an outer tube, gel may exit a streamer. In such a scenario, the gel may be compliant with one or more regulations (spill regulations).

A gel fill approach can utilize a relatively low viscosity gel. In such an approach, the gel may offer better acoustical noise damping which in turn can reduce the number of sensors that suffice to adequately sample noise. Such an approach can reduce weight, power utilization, computation time, operator time, etc. A reduction in the number of sensors (sensor density) may reduce power and/or communication demands for operating and transmission of information from sensors. Such an approach can reduce overhead as to equipment managing power and communication. Cost of streamers and utilization of streamers may be reduced.

A relatively low viscosity gel can be amenable to flowing, which may be beneficial during manufacture of a streamer. However, a relatively low viscosity may increase flow rate from a streamer to an external environment where a breach occurs in an outer tube of the streamer (flow of gel to seawater, etc.). Where, in a seawater environment, gel tends to flow readily through a puncture into the seawater, the seawater may enter via the puncture (to occupy space formerly occupied by the gel). In such a scenario, the seawater may contact one or more components (electrical components, wires, etc.), which may be corroded or otherwise damaged upon contact with the seawater.

A gel is disposed within a physical structure; consider a streamer that includes a physical structure in which gel may reside. In such an approach, the physical structure can hinder gel from readily flowing out of a streamer upon damage such as a puncture or tear to an outer tube of the streamer. A physical structure may help to lift one or more constraints such as a viscosity constraint that may be linked to spill containment, prevention, etc.

A physical structure is a foam. A foam can be formed via one or more processes. A foam may be formed by trapping pockets of gas in a medium or media (liquid, solid, etc.). A foam may be a naturally occurring material such as a sponge (a multicellular organism that has a body with pores and channels). A foam may be characterized at least in part by volume of space that is not occupied by the physical structure of the foam.

A foam may be characterized as a solid foam, which may be a closed cell foam, an open cell foam or a foam with both closed and open cells. In a closed cell foam, gas resides in discrete pockets surrounded by solid material; whereas, in an open cell foam, various gas pockets can be interconnected. A foam may be a polymeric foam, a composite foam, etc.

A foam may be formed with isotropic properties. A foam may be formed with anisotropic properties. A foam may differ in structure with respect to a longitudinal axis and a radial axis. Where a foam is disposed in a substantially cylindrical chamber, it may respond differently to forces in a longitudinal direction than in a radial direction.

A foam may be characterized at least in part via struts. Struts can form shapes such as a window frame where the frame may include from about three sides to about eight sides. A frame may be formed from three struts to about eight struts. In such an approach, the frame may define an opening that is part of an open cell foam. The opening can be characterized by one or more parameters such as angle with respect to one or more neighbors, cross-sectional area, etc. A foam may be characterized by cell size and/or distribution of cell sizes. A foam's properties may depend on strut characteristics. A Young's modulus of a foam may depend on strut characteristics.

At low relative densities, open cell foams tend to deform primarily by cell-wall bending. As the relative density increases (R > 0.1) the contribution of simple extension or compression of the cell walls becomes more pronounced. Where an open cell foam is filled with gel, the deformation of the open cell foam may be altered. Young's modulus can be dependent on density of a foam. A foam may have a Poisson's ratio of about zero or may differ from zero. Network paths within a foam as to space may dictate how gel may move or respond in a foam.

A foam may be formed in situ in a streamer. Material may be injected into the streamer where the material reacts and forms an open cell foam. In such an approach, gel may be injected into the foam (optionally drawn in via application of a vacuum, etc.). A gel and foam material may be formed in situ. Chemicals may be injected into a streamer where an open cell foam forms with gel in its cells; consider a combination of materials that can separate upon reaction such that an open cell foam is formed by one or more of the materials and one or more other materials may be a gel and/or form a gel in the cells of the foam.

A physical structure that can be disposed in a streamer may be an open cell foam; consider an open cell hydrophobic and oleophilic foam. In such an approach, the foam may be combined with a low viscosity oil-based gel.

A foam can provide mechanical structure and act as a barrier to flow hindering gel from flowing freely out of a section of a streamer. A foam may provide for chemical bonding with a gel, which can help to maintain the gel inside the physical structure provided by the foam and repel seawater.

A foam may be doped with one or more polymers that can swell and seal a cut in a streamer to further reduce spill and water ingress.

A streamer can be a gel filled streamer. Such a streamer may lower cost due to a reduction in a number of sensors for a desired level of geophysical performance. Such a reduction may be due to a reduction in noise level derived from a quieter gel platform. A quieter gel platform may be achieved through use of a relatively low viscosity gel.

Located pressure and acceleration sensors (sensor packages) in a foam/gel streamer may tend to be relatively immune to some of noise modes which may otherwise impact off-centered sensors.

A foam/gel streamer may have a reduced cost of material, labor and/or equipment cost to assemble when compared to a streamer that utilizes a plastic internal structure or structures and higher viscosity gel.

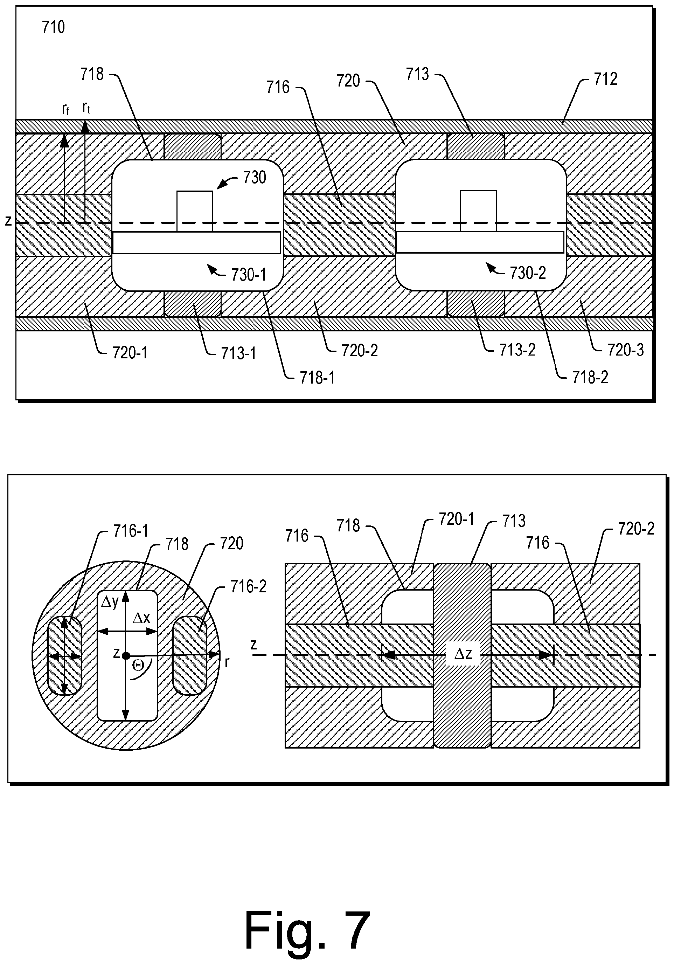

Fig. 7 shows a portion of a streamer 710 (a seismic streamer, a seismic streamer cable, etc.) that includes an outer tube 712, one or more spacers 713 (see the spacers 713-1, 713-2), one or more ropes 716 (see the ropes 716-1, 716-2), one or more component tubes 718 (see the component tubes 718-1, 718-2), decoupling foam soaked with gel 720 (see foam/gel 720-1, 720-2, 720-3) and one or more sensor packages 730 (see the packages 730-1, 730-2).

In Fig. 7, various features of the streamer 710 can be defined with respect to one or more coordinate systems. A cylindrical coordinate system that includes r, z and $\Theta$ coordinates may be utilized and/or a Cartesian coordinate system may be utilized (x, y or x, y and z).

As shown in Fig. 7, the streamer 710 can be defined at least in part by a longitudinal axis, shown as the z-axis. Various features, components, etc. may be defined in one or more cross-sections in a r,z-plane, a r,$\Theta$-plane, a z,$\Theta$-plane, etc.

As shown in Fig. 7, the outer tube 712 can be of a substantially circular cross-section with an outer tube radius ($r_t$) and an inner tube radius (approximately equal to $r_f$ of the foam soaked with gel 720) that defines an interior space that is occupied by the one or more spacers 713, the one or more ropes 716, the one or more component tubes 718, the decoupling foam soaked with gel 720 and the one or more sensor packages 730. A rope may be a structural element with a length that spans a distance of the order of meters or more. Such an element may be a structural rib that is sufficiently flexible to allow for coiling of a streamer cable (for storage, deployment via a reel, etc.).

As shown in Fig. 7, the component tube 718 may be substantially aligned with the longitudinal axis (z-axis) and may be defined at least in part by dimensions in an x,y-plane (see $\Delta x$ and $\Delta y$). As shown, one or both of the ropes 716-1 and 716-2 may be defined at least in part by dimensions in an x,y-plane ($\Delta x$ and $\Delta y$). The component tube 718 can be approximately disposed centrally between a plurality of ropes such as the ropes 716-1 and 716-2.

As to the foam soaked with gel 720, in Fig. 7, it occupies the interior space defined by the outer tube 712 in regions between the sensor packages 730-1 and 730-2 from a surface of one of the component tubes 718-1 to a surface of another one of the component tubes 718-2 where the foam soaked gel 720 is disposed about portions of the ropes 716-1 and 716-2 as well as in substantially annular regions about the sensor packages 730-1 and 730-2 (as they may be disposed in the component tubes 718-1 and 718-2, respectively).

The spacers 713-1 and 713-2 may be relatively space-filling to form compartments within the interior space such that foam soaked gel 720-1, 720-2 and 720-3 may be in three substantially separate compartments. The spacers 713-1 and 713-2 may include openings (passages) such that foam and/or gel may be in the openings where gel in one compartment may be in communication with gel in another one of the compartments. The spacers 713-1 and 713-2 may hinder flow of gel (resist flow of gel where a breach occurs in the outer tube 712, etc.).

A rope may be constructed of a material such as a para-aramid material; consider KEVLAR® material, which is a para-aramid synthetic fiber material (E. I. du Pont de Nemours and Company, Delaware).

A spacer may be constructed of a material such as a para-aramid material; consider KEVLAR® material, which is a para-aramid synthetic fiber material (E. I. du Pont de Nemours and Company, Delaware).

A spacer may be constructed of a material such as a metallic material (metal, metal alloy, etc.) such as aluminum or an aluminum alloy. A spacer may be surface treated and/or coated to reduce corrosion. A spacer may be constructed of a material such as a polymeric material (a plastic, etc.).

An outer tube may be a skin that acts to encase components of a streamer. In such an approach, the skin may seal the components of a streamer including a gel of a foam and gel composite material.

In Fig. 7, the two ropes 716 may be of an elongated shape and run axially alone a length of the streamer 710. The two ropes 716 can pass through the spacers 713 where the spacers 713 can act to locate the two ropes 716. In Fig. 7, the spacers 713 can act to locate the individual component tubes 718 where each of the component tubes 718 can define an interior chamber therein for one of the sensor packages 730. A sensor package can be hydrophone sensor package, a geophone sensor package (accelerometer sensor package, etc.), a combination sensor package, etc.

In Fig. 7, the foam and gel 720 can surround at least a portion of each of the component tubes 718. The foam and gel 720 can be disposed between two component tubes 718. The foam and gel 720 can be disposed between the outer tube 712 and the ropes 716. The foam and gel 720 can be disposed between the outer tube 712 and the component tubes 718. A chamber may be defined between the two spacers 713. In such an approach, the foam and gel 720 can be a contiguous mass within the chamber.

The spacers 713 may be positioned at one or more other axial locations along the streamer 710. A component tube may be offset from a spacer. A component tube may be operatively coupled to a rope or ropes. A component tube may be a part of a sensor package where such a sensor package can include a tube or other shaped structure such as a sensor package housing.

The streamer 710 can be a seismic streamer that includes the outer tube 712 that defines an interior space having a longitudinal axis (z-axis); sensor packages 730 disposed in the interior space at respective positions along the longitudinal axis; a rope 716 disposed in the interior space and offset from the longitudinal axis; and gel filled foam 720 disposed in the interior space at least in part between the sensor packages 730 and at least in part about portions of the rope 716. As shown in Fig. 7, the sensor packages 730 may be within a sensor package housing such as one of the component tubes 718, which may be tube or otherwise shaped. A component shell may be oval, rectangular, cubic, etc.

A foam and gel matrix may be tailored as to vibrations where a streamer can experience transverse vibration, longitudinal vibrations and angular or torsional vibrations.

A method can include applying a vacuum to a space that includes open cell foam and flowing gel into cells of the foam. Such a method may be implemented via use of a vacuum pump. A vacuum conduit may be coupled to a streamer where gel can flow from an opening or openings for introduction of gel and into cells of an open cell foam or open cell foams. In such an approach, the gel may flow in clearances around one or more components to reach cells of foam. A degassing process may be utilized to reduce entrainment of gas in the gel. A process may include vibrating a supply of gel to help degas the gel, optionally while subjecting the supply to a vacuum (reduced pressure less than atmospheric). A vibration process may utilize an ultrasonic vibrator that can help to fill gel into cells of an open cell foam. An outer tube of a streamer cable may optionally include ports that can be utilized for filling, degassing, etc. In such an approach, the ports may be sealed prior to deployment of a streamer cable.

A foam may be a reticulated foam, which can be a porous, low density solid foam that has a high proportion of open cells such that it may be referred to as an open cell foam (greater than about 80 percent of cells being open). In a reticulated foam, lineal boundaries where the bubbles meet (plateau borders) may form struts of cells.

During formation of an open cell foam, reticulation can be applied as a process that aims to remove window membranes of cells. Reticulation can include thermal reticulation (zapping, etc.) and/or chemical reticulation (quenching, etc.).

A solid component of a reticulated foam may be predominantly polymer or polymers (polyurethane, etc.) or may be a composite material that includes one or more polymers. A polymer may be a polyether urethane or a polyester urethane. Polyether and/or polyester polymers may be utilized.

A fluid or gel may be flowed into an open cell foam to provide suitable acoustic properties at and near a sensor (hydrophone, etc.). In such an approach, the composite foam and fluid or gel material may be relatively free of gas (air bubbles, etc.). Such a material may possess desirable audiophonic properties. A foam may be an acoustic foam that is a relatively lightweight material made from one or more of polyether, polyester, melamine, etc.

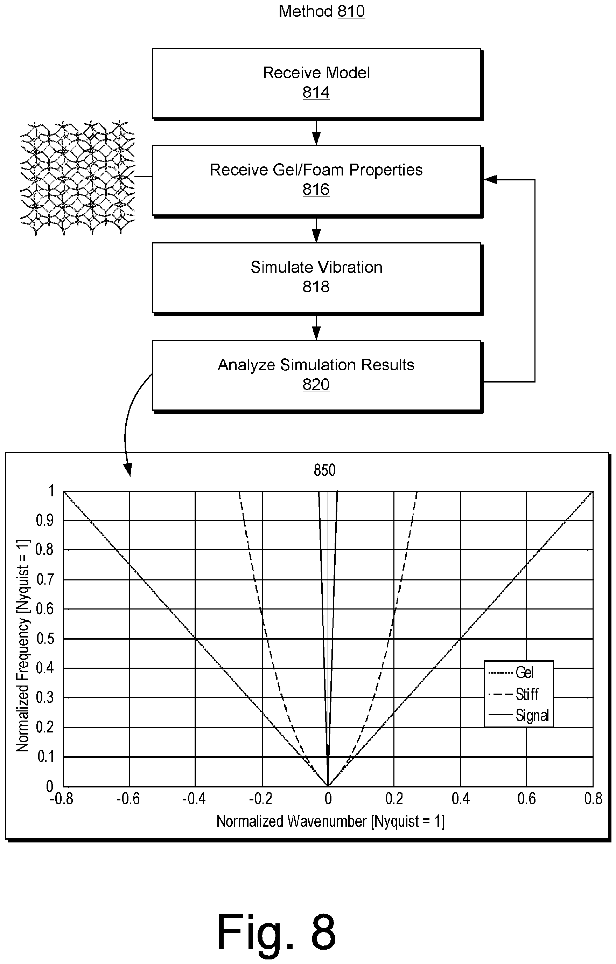

Fig. 8 shows a method 810 and a plot 850. As shown, the method 810 includes a reception block 814 for receiving a model, a reception block 816 for receiving gel and foam properties, a simulation block 818 for simulating vibration using the model and the properties and an analysis block 820 for analyzing the simulation results. In such an approach, the method 810 can continue to the reception block 816 where the properties may be tailored to achieve desired results, which may indicate that a particular gel and foam combination can reduce undesirable effects of vibration on a streamer (with respect to sensors of one or more sensor packages). Such a method may be performed for one or more environmental conditions, which may correspond to particular geographies, seasons, etc. A streamer (a streamer cable) can be of a particular structure where gel and foam within the streamer can be tailored to suit environmental conditions for a survey or surveys.

In Fig. 8, results are illustrated in the plot 850 of normalized frequency versus normalized wavenumber for a signal, a stiff streamer and a gel-filled streamer with respect to transverse vibrations. The velocity of transversal vibration noise can be slower than the seismic signal and may be in a range of about 30 m/s to about 120 m/s in a relatively stiff cable.

For a fluid-filled or gel-filled streamer, Young's modulus may be taken to be approximately zero (consider a low density open cell foam, etc.). The frequency-wavenumber dispersion may be given as:

$$\frac{k^2}{f^2}T - \frac{\pi d^2 \rho_a}{4} = 0$$

In such an approach, the mass per unit length of the streamer is adjusted with a density, $\rho_a$, which ac-

counts for an added mass effect as a towed streamer moves some volume of fluid with it. In the foregoing approach of a fluid-filled or gel-filled streamer, phase velocity may be modeled as being relatively independent of frequency (resonance frequencies).

The data in the plot 810 illustrate how increased transversal propagation speed, due to bending stiffness in a stiff section, can reduce aliasing into a signal cone.

As to longitudinal vibrations, for a streamer that includes KEVLAR® ropes (stress members, strength ropes, etc.), inline vibration noise can propagate at a velocity of about 1,500 m/s. Longitudinal vibration may be modeled as a beam via a second-order partial differential equation, which depends in part on Young's modulus.

As to angular or torsional vibrations, particle motion sensors can be subject to some amount of rotation about a longitudinal axis of a streamer as it is being towed. Rotational propagation velocity may be about zero for a fluid-filled or a gel-filled streamer and around about 500 m/s to about 1,000 m/s for a stiff section of a streamer. Torsional vibration may leak onto transversal sensors if they are offset from a centerline (rotational axis) of a streamer.

A streamer can include one or more features that aim to maintain one or more sensors at or proximate to a centerline. A gel filled foam may be utilized to decrease displacement of a sensor or sensors from a centerline. In such an approach, effects of torsional vibration may be reduced with respect to transversal and/or other sensors.

A gel filled foam may be tailored to have a particular amount of stiffness. A gel filled foam may be stiffer than a gel and, in the plot 850, simulated or actual data for a gel filled foam may lie between the gel curve and the stiff curve.

As mentioned, where sensors can be maintained at or proximate to a rotational axis (longitudinal axis) of a streamer, noise may be reduced. A gel filled foam can be tailored to provide a desired amount of stiffness that may help to maintain position of one or more sensors, sensor packages, etc.

Where a seismic streamer includes a swellable material, upon damage to an outer tube, the swellable material may swell and act to compartmentalize a damaged region from one or more other regions. Where a portion of an outer tube is damaged at an axial position corresponding to a chamber, water may enter that chamber by displacing fluid (silicone oil, etc.) where swellable material is exposed to the water, which, in turn, causes the swellable material to swell (increase in volume) to seal off or otherwise diminish flow of fluid from one or more adjacent chambers to the damaged chamber. Such a swellable material can be considered to be a healant material that makes the seismic streamer a self-healing seismic streamer.

As mentioned, a gel and/or foam may include one or more swellable components or otherwise reactive components that can cause swelling upon puncture of an outer tube (a streamer skin). Such a gel and/or foam can be a healant material or materials. A gel and/or foam may be swellable such as water swellable.

A gel and foam material may be formulated to hinder intrusion by water (seawater). Where the gel and/or the foam are hydrophobic, a surface tension may be increased that helps to repel water. Multiple mechanisms may be employed via a gel and foam approach. Gel and/or foam may swell and/or gel and/or foam may be at least in part hydrophobic.

Gel and/or foam may react or otherwise respond to water in a manner that acts to limit escape of the gel and/or foam from a streamer. Gel and/or foam may be formulated to break into micelle or multilamellar vesicles, which may be more readily degraded by environmental forces.

A gel filled foam may provide for one or more of swelling, water repulsion and formation of structures upon exposure to water.

A method can include assembling internals of a streamer to form a section with an axial length of about 100 meters. Such a method can include pulling the internals in to an outer tube and filling the tube with an appropriate gel and foam. A method according to the invention includes filling a water swellable foam with gel to form a gel filled water swellable foam that, responsive to a breach in an outer tube and contact with water, transitions the gel filled water swellable foam from an unswollen state to a swollen state that hinders gel leakage from the breach in the outer tube. A breach in an outer tube may be a puncture or punctures, a cut or cuts, etc.

A swellable material can be an oil-swellable elastomer or elastomer system that can swell upon exposure to hydrocarbons. A swellable material can be a swellable elastomer or elastomer system that can swell upon exposure to silicone oil. A swellable material can be a water swellable elastomer or elastomer system that can swell upon exposure to one or more types of aqueous fluids.

A streamer can include one or more types of rubbers or other materials that swell under influence of oil, water or other liquids or gels in a seismic streamer. A streamer can include one or more elastomers that can expand and form an annular seal or seals when exposed to a fluid or fluids. An elastomer may be formed into a foam. A foam may be an open cell foam that can be filled with a gel.

Kerosene finds use as a filler material, which is a hydrocarbon fluid with a density of about 0.8 grams per cubic centimeter (composed of carbon chains between about 6 and about 16 carbon atoms per molecule). A gel may include kerosene and one or more gelling agents; consider one or more types of $SiO_2$ gelling agents that can form kerosene gel. A gel may be formed (a hydrocarbon gel) using one or more types of silicas (silica 230, silica 530, etc.). A gel may be formed (a hydrocarbon gel) using one or more types of fumed silicas (AEROSIL™ R 972 as a fumed silica after-treated with DDS (dimethyldichlorosilane, etc.)). A gel filled foam can include a hydrocarbon gel that includes one or more gelling agents that include the chemical element silicon (Si).

A gel can be of a density less than about 0.95 grams per cubic centimeter. A gel filled foam can be of a density less than about 0.95 grams per cubic centimeter.

An elastomer may be oil- or water-sensitive. An oil may be a hydrocarbon oil or another type of oil (silicone oil, etc.). Expansion rates and pressure ratings may be affected by one or more factors. Oil-activated elastomers, which may operate based on absorption and dissolution, may be affected by fluid temperature as well as the concentration and specific gravity of hydrocarbons in a fluid. A water-activated elastomer may be affected by water temperature and/or salinity. A water-activated elastomer may operate at least in part via osmosis. A water-activate elastomer may operate based on a chemical reaction, which may be irreversible. When water is absorbed, reactive fillers expand and stiffen, building a secondary network within the elastomer as it swells. This network can mechanically reinforce the elastomer and enable higher differential pressures to be withstood by shorter lengths. It may also minimize thermal contraction.

A swellable composition can include inorganic material dispersed within a polymer matrix, where the inorganic material swells on contact with water due to hydration and phase modification of the inorganic material. A mineral filler capable of swelling on contact with water may be utilized (consider a metal oxide such as one or more of magnesium oxide (MgO) or calcium oxide (CaO)). A polymer can be a thermoset material, a thermoplastic material, etc.; consider a polymer matrix that includes one or more of polyetheretherketone, polyaryletherketones, polyamides (Nylon 6, Nylon 6,6, Nylon 6,12, Nylon 6,9, Nylon 12, Nylon 11), polycarbonate, polystyrene, polyphenylsulphone, polyphenylene sulphide, polysulphone, polytetrafluoroethylene, polypropylene, epoxy resins, furan resins, acrylonitrile-butadiene rubber, hydrogenated acrylonitrile-butadiene rubber and ethylene propylene diene M-class rubber (EPDM).

A polymer may be a polymer such as one of polyetheretherketone, polyphenylsulphone, polyphenylene sulphide, polysulphone, polypropylene, acrylonitrile-butadiene rubber, hydrogenated acrylonitrile-butadiene rubber and ethylene propylenediene M-class rubber (EPDM) or a polymer mixture thereof.

A swellable material may be made by blending an absorbent polymer into an elastomer where the swellable material may be a swellable elastomer.

A swellable material may include one or more of nitrile butadiene rubber (NBR), styrene butadiene rubber (SBR) based compositions, chlorobutadiene rubber based compositions, silicon rubber based compositions, carboxymethylcellulose and clays, natural rubber based compositions, and butadiene rubber compositions.

An oil-swellable elastomer may be a styrene butadiene rubber (SBR) (SBR with about 23.5% styrene, referenced 1502 at Astlett Rubber).

An oil-swellable material can swell when in contact with oil and may include one or more of neoprene rubber, natural rubber, nitrite rubber, hydrogenated nitrite rubber, acrylate butadiene rubber, poly acrylate rubber, butyl rubber, brominated butyl rubber, chlorinated butyl rubber, chlorinated polyethylene, styrene butadiene copolymer rubber, sulphonated polyethylene, ethylene acrylate rubber, epichlorohydrin ethylene oxide copolymer, ethylene-propylene-copolymer (peroxide cross-linked), ethylene-propylene-copolymer (sulphur cross-linked), ethylene-propylene-diene terpolymer rubber, ethylene vinyl acetate copolymer, fluoro rubbers, fluoro silicone rubber, silicone rubber, styrene-butadiene elastomer, styrene-butadiene-styrene elastomer, acrylonitrile-styrene-butadiene elastomer, ethylene-propylene-diene elastomer, alkylstyrene, polynorbornene, resin such as precrosslinked substituted vinyl acrylate copolymers, polymers of styrenes and substituted styrenes, polyvinyl chloride, copolymers of vinyl chloride, polymers and copolymers of vinylidene, acrylic polymers such as polymers of methylmethacrylate, ethyl acrylate; polymers containing alternating units of at least two polymers selected from styrene, pentadiene, cyclopentadiene, butylene, ethylene, isoprene, butadiene and propylene; diatomaceous earth, and mixtures of such materials.

A silicone oil can be a liquid polymerized siloxane with organic side chains such as polydimethylsiloxane.

A swellable material can be a self-lubricating polymer that includes a cross-linked polymer (such as a rubber or elastomer) that is solvated with a liquid having a chemical affinity for that polymer material. Chemical affinity can create a solvent effect that causes the polymer to absorb an amount of the liquid and swell. A cross-linked polymer may be capable of increasing its volume up to several-fold by absorbing amounts of solvent. A swollen polymer network may be held together by molecular strands that are connected by chemical bonds (cross-links). Lubricating liquid may interact with a polymer due to intermolecular interactions such as solvation. To swell a polymer, the enthalpy of mixing between the polymer and the lubricating liquid may be sufficiently low so that they mix readily with each other when mixed together, and/or undergo energetically favorable chemical interactions between each other.

Where a polymer is a hydrophobic polymer (an oleophilic polymer) such as polydimethylsiloxane (PDMS), a lubricating liquid can be a hydrophobic liquid such as silicone oil, hydrocarbons, and/or the like; consider a silicone elastomer (covalently cross-linked) that can be swollen with a silicone oil. More particularly, consider a polydimethylsiloxane (PDMS) elastomer that can be swollen with silicone oil (methyl, hydroxyl, or hydride-terminated PDMS). Hydride-terminated PDMS may exhibit swelling with a range of lubricating liquids. Hydroxyl-terminated silicone oil in PDMS may be utilized as a type of swellable polymer providing oleophobic/hydrophilic surface.

A gel may be a petroleum-based synthetic urethane polymer gel or another type of gel. A gel can include a non-fluid colloidal network and/or polymer network that is expanded throughout its volume via fluid. A gel may be characterized by having a finite and relatively small yield stress. A gel may be of an adjusted density with respect to water (seawater, etc.). A gel filled foam may be of an adjusted density. A gel filled foam may include microballoons, air bubbles or buoyant micro-spheres that reduce density. Higher density particles, etc. may be added to a gel filled foam (to gel and/or foam) to reduce buoyancy.

A seismic streamer includes an outer tube that defines an interior space having a longitudinal axis; sensor packages disposed in the interior space at respective positions along the longitudinal axis; a rope disposed in the interior space and offset from the longitudinal axis; and gel filled foam disposed in the interior space at least in part between the sensor packages and at least in part about portions of the rope where the gel filled foam includes a water swellable material that, responsive to a breach in the outer tube and contact with water, transitions the gel filled foam from an unswollen state to a swollen state that hinders gel leakage from the breach in the outer tube. In such a seismic streamer, the gel filled foam can be or include an open cell foam.

A seismic streamer can include a material that swells upon contact with water that is or includes a polymeric material. A gel filled foam can include a foam doped with a material that swells upon contact with water. A seismic streamer can include a gel filled foam that is or that includes an oleophilic foam and gel that is or includes an oil-base gel.

A seismic streamer can include an outer tube that defines an interior space; sensor packages disposed in the interior space; and gel filled foam disposed in the interior space. In such an approach, the gel filled foam can include an open cell foam.

A seismic streamer can include an outer tube that defines an interior space having a longitudinal axis; sensor packages disposed in the interior space at respective positions along the longitudinal axis; a rope disposed in the interior space and offset from the longitudinal axis; and gel filled foam disposed in the interior space at least in part between the sensor packages and at least in part about portions of the rope.

A gel filled foam can include a swellable material, which may be a hydrocarbon swellable material, a water swellable material, an aqueous fluid swellable material and/or a silicone oil swellable material. A swellable material may be part of a foam, part of a composite foam (a polymeric foam with inorganic material and/or other material that is swellable), be a gel, be part of a gel, be part of a composite gel, etc.

A seismic streamer can include spacers where gel filled foam is disposed at least in part between pairs of the spacers. In such an approach, the spacers can define chambers within an interior space of the seismic streamer.

Sensor packages of a seismic streamer can include one or more of a hydrophone sensor package and an accelerometer sensor package. A seismic streamer can include at least one geophone. A seismic streamer can include a tilt meter. A seismic streamer can include a compass. A seismic streamer can include a gyroscope. A seismic streamer can include one or more geophysical sensors that measure one or more geophysical phenomena such as one or more of gravity and magnetic field.

Gel filled foam in a seismic streamer can localize one or more of the sensor packages by supporting physically a package in a seismic streamer (an outer tube of the seismic streamer).

A gel filled foam can be characterized at least in part via a Young's modulus. A Young's modulus may characterize, at least in part, stiffness of a gel filled foam. A gel filled foam can have a stress and strain relationship, which may be isotropic or anisotropic. A seismic streamer can include a gel filled foam that imparts stiffness to the seismic streamer. A gel filled foam may have a tailored Young's modulus that imparts a desired amount of stiffness to a seismic streamer. In such an approach, stiffness may be imparted by foam, gel in foam and/or gel and foam in a gel filled foam.

A seismic streamer can include gel filled foam that includes foam that has a density less than approximately 24 kilograms per cubic meter (kcm) or about 0.024 grams per cubic centimeter (gcc) (less than approximately 1.5 pounds per cubic foot, pcf), which may be a density less than approximately 16 kilograms per cubic meter or about 0.016 grams per cubic centimeter (less than approximately 1 pound per cubic foot). A gel filled foam can include polyurethane as a polyurethane, open cell foam that may be a low density foam (less than about 24 kcm, which may be less than about 16 kcm). A gel filled foam that includes polyurethane can include polyester and/or polyether. A foam density may be a polymer density. Where one or more additives are included, a foam density may differ from the polymer density. A gel can be of a density less than about 0.95 grams per cubic centimeter. A gel filled foam can be of a density less than about 0.95 grams per cubic centimeter. A gel filled foam can be or include a hydrocarbon gel that includes hydrocarbons and at least one gelling agent; consider kerosene and at least one gelling agent that includes silicon as a chemical element (in the form of silica, etc.).

A seismic streamer can include a length greater than approximately 5 meters. A seismic streamer can include a dimension of an outer tube that is less than approximately 50 centimeters. A seismic streamer can include one rope, two ropes or more than two ropes (typically at least two ropes).

A seismic streamer can include component tubes where sensor packages are disposed within respective component tubes and where gel filled foam is disposed about portions of the component tubes (between outer surfaces of the component tubes and an inner surface of an outer tube. In such an approach, the gel filled foam can be in contact with these outer surfaces and the inner surface. A gel filled foam can be space filling such that a seismic streamer is substantially void free in regions between sensor packages (between component tubes, etc.).

Component tubes can be disposed between ropes and supported at least in part by respective spacers where the ropes pass through the spacers (through openings in the spacers).

A method includes assembling a seismic streamer that includes an outer tube that defines an interior space having a longitudinal axis, sensor packages disposed in the interior space at respective positions along the longitudinal axis, a rope disposed in the interior space and offset from the longitudinal axis, and a water swellable foam disposed in the interior space at least in part between the sensor packages and at least in part about portions of the rope; filling the water swellable foam with gel to form a gel filled water swellable foam that, responsive to a breach in the outer tube and contact with water, transitions the gel filled water swellable foam from an unswollen state to a swollen state that hinders gel leakage from the breach in the outer tube; and sealing the seismic streamer. Such a method can include forming the water swellable foam in situ and/or injecting the water swellable foam into the interior space. A method can include forming a water swellable foam by doping a foam forming material with a water swellable material.

A method includes receiving signals from sensors of a seismic streamer deployed in water where the seismic streamer includes an outer tube and a gel filled foam that includes a material that swells upon contact with water; responsive to a puncture at a location in the outer tube of the seismic streamer and contact between a portion of the water and a portion of the material that swells upon contact with water, swelling the portion of the material that swells upon contact with water; and, responsive to the swelling, hindering gel leakage from the seismic streamer via the puncture. Such a method can include towing the seismic streamer in the water and/or receiving signals from at least a portion of the sensors of the seismic streamer after the swelling.

A method can include receiving a model; receiving properties for a gel filled foam; simulating vibration based on the model and the properties to generate simulation results; and constructing a seismic streamer that includes a gel filled foam formulated at least in part based on the simulation results. In such an approach, the method can include receiving environmental conditions for a sea environment and simulating vibration based at least in part on the environmental conditions. A method can include outputting formulations for gel filled foam where the formulations correspond to different vibration scenarios, which may correspond to different surveys and/or correspond to different geographical regions.

**Claims**

1. A seismic streamer (610; 710) comprising:

   an outer tube (612; 712) that defines an interiorspace having a longitudinal axis;
   sensor packages (620, 630; 730-1,730-2) disposed in the interior space at respective positions along the longitudinal axis;
   a rope (616; 716-1, 716-2) disposed in the interior space and offset from the longitudinal axis;
   **characterized in that** the streamerfurther comprises
   gel filled foam (720) disposed in the interior space at least in part between the sensor packages (620, 630; 730-1, 730-2) and at least in part about portions of the rope (616; 716-1, 716-2), wherein the gel filled foam comprises a water swellable material that, responsive to a breach in the outer tube (612; 712) and contact with water, transitions the gel filled foam from an unswollen state to a swollen state that hinders gel leakage from the breach in the outer tube (612; 712).

2. The seismic streamer (610; 710) of claim 1, wherein the gel filled foam (720) comprises an open cell foam.

3. The seismic streamer (610; 710) of claim 1, wherein the material that swells upon contact with water comprises a polymeric material.

4. The seismic streamer (610; 710) of claim 1, wherein the gel filled foam (720) comprises foam doped with the material that swells upon contact with water.

5. The seismic streamer (610; 710) of any of claims 1 to 4, comprising spacers (613; 713-1, 713-2), wherein the gel filled foam (720) is disposed at least in part between pairs of the spacers (613; 713-1, 713-2), and wherein the spacers (613; 713-1, 713-2) define chambers (614) within the interior space.

6. The seismic streamer (610; 710) of any preceding claim, wherein the sensor packages (620, 630; 730-1, 730-2) comprise at least one of hydrophone sensor packages and accelerometer sensor packages.

7. The seismic streamer (610; 710) of any preceding claim, wherein the gel filled foam (720) localizes one or more of the sensor packages (620, 630; 730-1, 730-2).

8. The seismic streamer (610; 710) of any preceding claim, comprising a length greater than approximately 5 meters.

9. The seismic streamer (610; 710) of any preceding claim, comprising component tubes (718), wherein the sensor packages (620, 630; 730-1, 730-2) are disposed within respective component tubes (718) and wherein the gel filled foam (720) is disposed about portions of the component tubes (718).

10. The seismic streamer (610; 710) of any preceding claim, wherein the gel filled foam (720) comprises foam that comprises a density less than approximately 24 kilograms per cubic meter.

11. The seismic streamer (610; 710) of any preceding claim, wherein the gel filled foam (720) comprises polyurethane.

12. The seismic streamer (610; 710) of any claims 1 to 10, wherein the gel filled foam (720) comprises an oleophilic foam and wherein the gel comprises an oil-base gel.

13. A method **characterized in that** it comprises:

assembling a seismic streamer (610; 710) that comprises an outer tube (612; 712) that defines an interior space having a longitudinal axis, sensor packages (620, 630; 730-1, 730-2) disposed in the interior space at respective positions along the longitudinal axis, a rope (616; 716-1, 716-2) disposed in the interior space and offset from the longitudinal axis, and a water swellable foam (720) disposed in the interior space at least in part between the sensor packages (620, 630; 730-1, 730-2) and at least in part about portions of the rope (616; 716-1, 716-2); filling the water swellable foam (720) with gel to form a gel filled water swellable foam that, responsive to a breach in the outer tube (612; 712) and contact with water, transitions the gel filled water swellable foam from an unswollen state to a swollen state that hinders gel leakage from the breach in the outer tube (612; 712); and sealing the seismic streamer (610; 710).

14. The method of claim 13, comprising forming the water swellable foam (720) in situ.

15. The method of claim 13 or 14, comprising injecting the water swellable foam (720) into the interior space.

16. The method of any of claims 13 to 15, comprising forming the water swellable foam (720) by doping a foam forming material with a water swellable material.

17. A method **characterized in that** it comprises:

receiving signals from sensors of a seismic streamer (610; 710) according to claim 1 or obtained according to claim 13 and deployed in water; responsive to a puncture at a location in the outer tube (612; 712) of the seismic streamer (610; 710) and contact between a portion of the water and a portion of the material that swells upon contact with water, swelling the portion of the material that swells upon contact with water; and responsive to the swelling, hindering gel leakage from the seismic streamer (610; 710) via the puncture.

18. The method of claim 17, comprising towing the seismic streamer (610; 710) in the water.

19. The method of claim 17 or 18, comprising receiving signals from at least a portion of the sensors of the seismic streamer (610; 710) after the swelling.

**Patentansprüche**

1. Seismischer Streamer (610; 710), umfassend:

ein äußeres Rohr (612; 712), das einen Innenraum mit einer Längsachse definiert; Sensorpakete (620, 630; 730-1, 730-2), die in dem Innenraum an entsprechenden Positionen entlang der Längsachse angeordnet sind; ein Seil (616; 716-1, 716-2), das in dem Innenraum angeordnet und von der Längsachse versetzt ist; **dadurch gekennzeichnet, dass** der Streamer ferner umfasst: einen gelgefüllten Schaum (720), der in dem Innenraum zumindest teilweise zwischen den Sensorpaketen (620, 630; 730-1, 730-2) und zumindest teilweise um Abschnitte des Seils (616; 716-1, 716-2) herum angeordnet ist, wobei der gelgefüllte Schaum ein in Wasser quellbares Material umfasst, das in Reaktion auf einen Bruch in dem äußeren Rohr (612; 712) und in Kontakt mit Wasser den gelgefüllten Schaum von einem ungequollenen Zustand in einen gequollenen Zustand überführt, der ein Austreten des Gels aus dem Bruch in dem äußeren Rohr (612; 712) verhindert.

2. Seismischer Streamer (610; 710) nach Anspruch 1, wobei der gelgefüllte Schaum (720) einen offenzelligen Schaum umfasst.

3. Seismischer Streamer (610; 710) nach Anspruch 1, wobei das Material, das bei Kontakt mit Wasser quillt, ein polymeres Material umfasst.

4. Seismischer Streamer (610; 710) nach Anspruch 1, wobei der gelgefüllte Schaum (720) einen Schaum umfasst, der mit dem Material dotiert ist, das bei Kontakt mit Wasser quillt.

5. Seismischer Streamer (610; 710) nach einem der Ansprüche 1 bis 4, der Abstandshalter (613; 713-1, 713-2) umfasst, wobei der gelgefüllte Schaum (720) zumindest teilweise zwischen Paaren der Abstandshalter (613; 713-1, 713-2) angeordnet ist, und wobei die Abstandshalter (613; 713-1, 713-2) Kammern (614) innerhalb des Innenraums definieren.

6. Seismischer Streamer (610; 710) nach einem der vorhergehenden Ansprüche, wobei die Sensorpakete (620, 630; 730-1, 730-2) wenigstens eines aus Hydrophonsensorpaketen und Beschleunigungssensorpaketen umfassen.

7. Seismischer Streamer (610; 710) nach einem der vorhergehenden Ansprüche, wobei der gelgefüllte Schaum (720) eines oder mehrere der Sensorpakete (620, 630; 730-1, 730-2) fixiert.

8. Seismischer Streamer (610; 710) nach einem der vorhergehenden Ansprüche, der eine Länge von mehr als etwa 5 Metern umfasst.

9. Seismischer Streamer (610; 710) nach einem der vorhergehenden Ansprüche, der Komponentenrohre (718) umfasst, wobei die Sensorpakete (620, 630; 730-1, 730-2) innerhalb der jeweiligen Komponentenrohre (718) angeordnet sind, und wobei der gelgefüllte Schaum (720) um Abschnitte der Komponentenrohre (718) herum angeordnet ist.

10. Seismischer Streamer (610; 710) nach einem der vorhergehenden Ansprüche, wobei der gelgefüllte Schaum (720) einen Schaum umfasst, der eine Dichte von weniger als etwa 24 Kilogramm pro Kubikmeter umfasst.

11. Seismischer Streamer (610; 710) nach einem der vorhergehenden Ansprüche, wobei der gelgefüllte Schaum (720) Polyurethan umfasst.

12. Seismischer Streamer (610; 710) nach einem der Ansprüche 1 bis 10, wobei der gelgefüllte Schaum (720) einen oleophilen Schaum umfasst, und wobei das Gel ein Gel auf Ölbasis umfasst.

13. Verfahren, das **dadurch gekennzeichnet ist, dass** es umfasst:

Zusammenbauen eines seismischen Streamers (610; 710), der ein äußeres Rohr (612; 712) umfasst, das einen Innenraum mit einer Längsachse definiert, Sensorpakete (620, 630; 730-1, 730-2), die in dem Innenraum an entsprechenden Positionen entlang der Längsachse angeordnet sind, ein Seil (616; 716-1, 716-2), das in dem Innenraum angeordnet und von der Längsachse versetzt ist, und einen in Wasser quellbaren Schaum (720), der in dem Innenraum zumindest teilweise zwischen den Sensorpaketen (620, 630; 730-1, 730-2) und zumindest teilweise um Abschnitte des Seils (616; 716-1, 716-2) angeordnet ist;
Füllen des in Wasser quellbaren Schaums (720) mit Gel, um einen mit Gel gefüllten, in Wasser quellbaren Schaum zu bilden, der in Reaktion auf einen Bruch in dem äußeren Rohr (612; 712) und in Kontakt mit Wasser den mit Gel gefüllten, in Wasser quellbaren Schaum von einem ungequollenen Zustand in einen gequollenen Zustand überführt, wodurch ein Austreten des Gels aus dem Bruch in dem äußeren Rohr (612; 712) verhindert wird; und
Versiegeln des seismischen Streamers (610; 710).

14. Verfahren nach Anspruch 13, das ein Bilden des in Wasser quellbaren Schaums (720) in situ umfasst.

15. Verfahren nach Anspruch 13 oder 14, das ein Einspritzen des in Wasser quellbaren Schaums (720) in den Innenraum umfasst.

16. Verfahren nach einem der Ansprüche 13 bis 15, das ein Bilden des in Wasser quellbaren Schaums (720) durch ein Dotieren eines schaumbildenden Materials mit einem in Wasser quellbaren Material umfasst.

17. Verfahren, das **dadurch gekennzeichnet ist, dass** es umfasst:

Empfangen von Signalen von Sensoren eines im Wasser ausgebrachten seismischen Streamers (610; 710), der gemäß Anspruch 1 ausgebildet ist oder gemäß Anspruch 13 erhalten wurde,
Reagieren auf einen Einstich/Durchstoß an einer Stelle in dem äußeren Rohr (612; 712) des seismischen Streamers (610; 710) und in Kontakt zwischen einem Teil des Wassers und einem Teil des Materials, das bei Kontakt mit Wasser quillt, Quellen des Teils des Materials, das bei Kontakt mit Wasser quillt; und
Reagieren auf das Quellen, wodurch ein Austreten von Gel aus dem seismischen Streamer (610; 710) über den Einstich/Durchstoß verhindert wird.

18. Verfahren nach Anspruch 17, das ein Schleppen des seismischen Streamers (610; 710) im Wasser umfasst.

**19.** Verfahren nach Anspruch 17 oder 18, das ein Empfangen von Signalen von mindestens einem Abschnitt der Sensoren des seismischen Streamers (610; 710) nach dem Quellen umfasst.

**Revendications**

**1.** Flûte sismique (610 ; 710) comprenant :

un tube externe (612 ; 712) qui définit un espace intérieur qui comporte un axe longitudinal ;
des ensembles de capteurs (620, 630 ; 730-1, 730-2) qui sont disposés dans l'espace intérieur au niveau de positions respectives suivant l'axe longitudinal ;
un câble (616 ; 716-1, 716-2) qui est disposé dans l'espace intérieur et qui est décalé par rapport à l'axe longitudinal ; **caractérisée en ce que** la flûte comprend en outre :
de la mousse remplie de gel (720) qui est disposée dans l'espace intérieur au moins en partie entre les ensembles de capteurs (620, 630 ; 730-1, 730-2) et au moins en partie autour de sections du câble (616 ; 716-1, 716-2), dans laquelle la mousse remplie de gel comprend un matériau qui peut gonfler sous l'effet de l'eau et qui, en réponse à une rupture dans le tube externe (612 ; 712) et à une mise en contact avec de l'eau, fait passer la mousse remplie de gel d'un état non gonflé à un état gonflé qui empêche la fuite de gel depuis la rupture dans le tube externe (612 ; 712).

**2.** Flûte sismique (610 ; 710) selon la revendication 1, dans laquelle la mousse remplie de gel (720) comprend une mousse à alvéoles ouvertes.

**3.** Flûte sismique (610 ; 710) selon la revendication 1, dans laquelle le matériau qui gonfle suite à sa mise en contact avec de l'eau comprend un matériau polymérique.

**4.** Flûte sismique (610 ; 710) selon la revendication 1, dans laquelle la mousse remplie de gel (720) comprend une mousse qui est dopée avec le matériau qui gonfle suite à sa mise en contact avec de l'eau.

**5.** Flûte sismique (610 ; 710) selon l'une quelconque des revendications 1 à 4, comprenant des espaceurs (613 ; 713-1, 713-2), dans laquelle la mousse remplie de gel (720) est disposée au moins en partie entre des paires des espaceurs (613 ; 713-1, 713-2), et dans laquelle les espaceurs (613 ; 713-1, 713-2) définissent des chambres (614) à l'intérieur de l'espace intérieur.

**6.** Flûte sismique (610 ; 710) selon l'une quelconque des revendications précédentes, dans laquelle les ensembles de capteurs (620, 630 ; 730-1, 730-2) comprennent au moins l'un parmi les ensembles de capteurs à hydrophone et des ensembles de capteurs à accéléromètre.

**7.** Flûte sismique (610 ; 710) selon l'une quelconque des revendications précédentes, dans laquelle la mousse remplie de gel (720) localise un ou plusieurs des ensembles de capteurs (620, 630 ; 730-1, 730-2).

**8.** Flûte sismique (610 ; 710) selon l'une quelconque des revendications précédentes, comprenant une longueur supérieure à approximativement 5 mètres.

**9.** Flûte sismique (610 ; 710) selon l'une quelconque des revendications précédentes, comprenant des tubes constitutifs (718), dans laquelle les ensembles de capteurs (620, 630 ; 730-1, 730-2) sont disposés à l'intérieur de tubes constitutifs respectifs (718) et dans laquelle la mousse remplie de gel (720) est disposée autour de sections des tubes constitutifs (718).

**10.** Flûte sismique (610 ; 710) selon l'une quelconque des revendications précédentes, dans laquelle la mousse remplie de gel (720) comprend de la mousse qui présente une densité qui est inférieure à approximativement 24 kilogrammes par mètre cube.

**11.** Flûte sismique (610 ; 710) selon l'une quelconque des revendications précédentes, dans laquelle la mousse remplie de gel (720) comprend du polyuréthane

**12.** Flûte sismique (610 ; 710) selon l'une quelconque des revendications 1 à 10, dans laquelle la mousse remplie de gel (720) comprend une mousse oléophile et dans laquelle le gel comprend un gel à base d'huile.

**13.** Procédé **caractérisé en ce qu'**il comprend :

l'assemblage d'une flûte sismique (610 ; 710) qui comprend un tube externe (612 ; 712) qui définit un espace intérieur qui comporte un axe longitudinal, des ensembles de capteurs (620, 630 ; 730-1, 730-2) qui sont disposés dans l'espace intérieur au niveau de positions respectives suivant l'axe longitudinal, un câble (616 ; 716-1, 716-2) qui est disposé dans l'espace intérieur et qui est décalé par rapport à l'axe longitudinal et une mousse qui peut gonfler sous l'effet de l'eau (720) et qui est disposée dans l'espace intérieur au moins en partie entre les ensembles de capteurs (620, 630 ; 730-1, 730-2) et au moins en partie autour de sections du câble (616 ; 716-1, 716-2) ;

le remplissage de la mousse qui peut gonfler sous l'effet de l'eau (720) avec du gel pour former une mousse qui peut gonfler sous l'effet de l'eau remplie de gel et qui, en réponse à une rupture dans le tube externe (612 ; 712) et à une mise en contact avec de l'eau, fait passer la mousse qui peut gonfler sous l'effet de l'eau remplie de gel d'un état non gonflé à un état gonflé qui fait obstacle à la fuite de gel depuis la rupture dans le tube externe (612 ; 712) ; et

le scellement de la flûte sismique (610 ; 710).

14. Procédé selon la revendication 13, comprenant la formation de la mousse qui peut gonfler sous l'effet de l'eau (720) in situ.

15. Procédé selon la revendication 13 ou 14, comprenant l'injection de la mousse qui peut gonfler sous l'effet de l'eau (720) dans l'espace intérieur.

16. Procédé selon l'une quelconque des revendications 13 à 15, comprenant la formation de la mousse qui peut gonfler sous l'effet de l'eau (720) par dopage d'un matériau de formation de mousse avec un matériau qui peut gonfler sous l'effet de l'eau.

17. Procédé **caractérisé en ce qu'**il comprend :

la réception de signaux en provenance de capteurs d'une flûte sismique (610 ; 710) selon la revendication 1 ou obtenue selon la revendication 13 et déployée dans l'eau ;

en réponse à une perforation en un emplacement dans le tube externe (612 ; 712) de la flûte sismique (610 ; 710) et à une mise en contact entre une section de l'eau et une section du matériau qui gonfle suite à sa mise en contact avec de l'eau, le gonflement de la section du matériau qui gonfle suite à sa mise en contact avec de l'eau ; et

en réponse au gonflement, l'empêchement d'une fuite de gel depuis la flûte sismique (610 ; 710) via la perforation.

18. Procédé selon la revendication 17, comprenant le remorquage de la flûte sismique (610 ; 710) dans l'eau.

19. Procédé selon la revendication 17 ou 18, comprenant la réception de signaux en provenance d'au moins une section des capteurs de la flûte sismique (610 ; 710) après le gonflement.

Geologic Environment 100

Technique 140

Data 160

Downgoing direct arrival

Reflected upgoing primary

Downgoing multiple

Reflected upgoing multiple

Depth

Time

# Fig. 1

Fig. 2

# Fig. 3

## Fig. 4

Method 510

```
┌─────────────────────────────────────────────────┐
│                                                 │
│               Providing a Gel                   │
│                    514                          │
│                                                 │
└─────────────────────────────────────────────────┘
                         │
                         ▼
┌─────────────────────────────────────────────────┐
│                                                 │
│        Filling an Open Cell Foam with the Gel   │
│                to Form a Streamer               │
│                    516                          │
│                                                 │
└─────────────────────────────────────────────────┘
                         │
                         ▼
┌─────────────────────────────────────────────────┐
│                                                 │
│     Disposing the Streamer in an Aqueous Environment │
│                    518                          │
│                                                 │
└─────────────────────────────────────────────────┘
                         │
                         ▼
┌─────────────────────────────────────────────────┐
│                                                 │
│  In Response to Damage to the Streamer, Hindering Leakage │
│   of the Gel from the Streamer to the Aqueous Environment │
│                    520                          │
│                                                 │
└─────────────────────────────────────────────────┘
```

# Fig. 5

# Fig. 6

Fig. 7

Method 810

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5521885 A
- US 2011273957 A1
- US 2015004457 A1
- US 5949018 A